# EUROPEAN PATENT APPLICATION

(11) **EP 4 240 092 A1**
(43) Date of publication of application: **06.09.2023**
(21) Application number: 21896431.0
(22) Date of filing: 20.08.2021
(51) Int. Cl.: H04W 72/12

(54) **TRANSMISSION SCHEDULING METHOD AND APPARATUS, COMPUTING DEVICE AND STORAGE MEDIUM**

(30) Priority: 28.11.2020 CN 202011365634
(71) Applicant: Huawei Technologies Co., Ltd., Shenzhen, Guangdong 518129 (CN)
(72) Inventor: LIU, Jianfei, Shenzhen, Guangdong 518129 (CN); SUN, Yanbin, Shenzhen, Guangdong 518129 (CN); SI, Xiaoshu, Shenzhen, Guangdong 518129 (CN)
(74) Representative: MERH-IP Matias Erny Reichl Hoffmann Patentanwälte PartG mbB
(86) International application number: PCT/CN2021/113845
(87) International publication number: WO 2022/110926

(57) **Abstract**

This application belongs to the field of network communication technologies, and provides a transmission scheduling method, apparatus, and computing device, and a storage medium. The method includes: A first device receives a first uplink scheduling request of a second device, where the first uplink scheduling request includes first uplink buffer information, and the first uplink buffer information is determined based on uplink data to be sent by the second device. The first device generates a first uplink bandwidth allocation message based on information about interference between a plurality of devices connected to the first device and the first uplink buffer information, where interference caused to the second device when the second device transmits the uplink data by using an uplink resource indicated by the first uplink bandwidth allocation message is less than a target threshold. The first device receives the data sent by the second device by using the uplink resource. According to this application, when one device is connected to a plurality of devices, the device can schedule a resource for a device in the plurality of devices.

## Description

This application claims priority to Chinese Patent Application No. 202011365634.9, filed on November 28, 2020 and entitled "TRANSMISSION SCHEDULING METHOD, APARATUS, AND COMPUTING DEVICE, AND STORAGE MEDIUM", which is incorporated herein by reference in its entirety.

### TECHNICAL FIELD

This application relates to the field of network communication technologies, and in particular, to a transmission scheduling method, apparatus, and computing device, and a storage medium.

### BACKGROUND

With development of network communications technologies, data usually needs to be transmitted between two devices. When a device A in the two devices transmits data to a device B, the device A requests a resource from the device B, and the device B schedules the resource for the device A, where the resource is used by the device A to transmit the data to the device B.

In a related technology, only data transmission between two devices is considered. With development of the network communication technologies, data is transmitted between one device and a plurality of devices. Therefore, a solution of how one device schedules resources for a plurality of devices needs to be provided.

### SUMMARY

This application provides a transmission scheduling method, apparatus, and computing device, and a storage medium, to schedule a resource when data is transmitted between one device and a plurality of devices. Technical solutions are as follows:
According to a first aspect, this application provides a transmission scheduling method. The method includes: A first device receives a first uplink scheduling request of a second device, where the first uplink scheduling request includes first uplink buffer information, and the first uplink buffer information is determined based on uplink data to be sent by the second device. The first device generates a first uplink bandwidth allocation message based on information about interference between a plurality of devices connected to the first device and the first uplink buffer information, where the first uplink bandwidth allocation message indicates an uplink resource allocated to the second device, and interference caused to the second device when the second device sends the uplink data by using the uplink resource is less than a target threshold. The first device receives the data sent by the second device by using the uplink resource.

According to the solution provided in this application, the first device receives the first uplink scheduling request of the second device, determines to schedule the resource for the second device, and obtains the first uplink buffer information by parsing the first uplink scheduling request. The first device obtains the latest information about the interference between the plurality of devices connected to the first device, and generates the first uplink bandwidth allocation message based on the interference information and the first uplink buffer information. The second device sends the uplink data to the second device by using the uplink resource indicated by the first uplink bandwidth allocation message. The first device receives the uplink data sent by the second device by using the uplink resource. In this way, the first device may schedule the resource for the second device based on the information about the interference between the plurality of devices connected to the first device. Therefore, when the first device is connected to the plurality of devices, the first device can schedule the resource for the second device. In addition, because the information about the interference between the plurality of devices connected to the first device is considered, the interference can be avoided as much as possible during resource scheduling, so that a higher data transmission success rate is ensured.

In a possible implementation, that the first device generates a first uplink bandwidth allocation message based on information about interference between a plurality of devices connected to the first device and the first uplink buffer information includes: The first device determines group information of the plurality of devices based on the information about the interference between the plurality of devices connected to the first device. The first device generates the first uplink bandwidth allocation message based on the group information of the plurality of devices and the first uplink buffer information, where interference caused when devices belonging to a same group transmit data by using a same resource is less than the target threshold.

According to the solution provided in this application, the first device groups, based on the information about the interference between the plurality of devices connected to the first device, devices that do not interfere with each other into a group, to obtain the group information of the plurality of devices, where interference caused when devices in each group transmit data by using a same resource is less than the target threshold. The first device generates the first uplink bandwidth allocation message based on the group information of the plurality of devices and the first uplink buffer information. Then, the first device provides the uplink resource allocated to the second device. In this way, because interference caused when devices in a group transmit data is less than the target threshold, the resource is scheduled for the second device based on the group information, so that an appropriate resource can be scheduled.

In a possible implementation, the first device is an optical line terminal (optical line terminal, OLT), the second device is a terminal device (station, STA), the plurality of devices are a plurality of primary optical network terminals (optical network terminals, ONTs), the plurality of primary ONTs access the OLT, and the second device accesses a primary ONT through an edge ONT. The method further includes: The first device receives information, about interference between edge ONTs connected to the plurality of primary ONTs, sent by the plurality of primary ONTs, where the information about the interference between the connected edge ONTs includes one or more of a received signal strength indication (received signal strength indication, RSSI), a channel occupancy ratio, or a channel occupancy spacing. The first device determines strength of interference between the plurality of primary ONTs based on the information about the interference between the edge ONTs connected to the plurality of primary ONTs. That the first device determines group information of the plurality of devices based on the information about the interference between the plurality of devices connected to the first device includes: The first device determines the group information of the plurality of primary ONTs based on the strength of the interference between the plurality of primary ONTs connected to the first device.

According to the solution provided in this application, the OLT determines the strength of the interference between the plurality of primary ONTs based on the information about the interference between the edge ONTs connected to the primary ONTs, and determines the group information of the plurality of primary ONTs based on the strength of the interference between the plurality of primary ONTs. When the resource is scheduled for the STA, because the STA accesses the primary ONTs, mutual interference between the primary ONTs is considered, so that interference between STAs connected to the primary ONTs can be reduced.

In a possible implementation, the first device is a primary ONT, the second device is a STA, the plurality of devices are STAs connected to a plurality of edge ONTs, and the plurality of edge ONTs access the primary ONT. The method further includes: The first device receives channel matrices, between the plurality of edge ONTs and the STAs connected to the plurality of edge ONTs, sent by the plurality of edge ONTs. That the first device determines group information of the plurality of devices based on the information about the interference between the plurality of devices connected to the first device includes: The first device determines, based on the channel matrices between the plurality of edge ONTs and the STAs connected to the plurality of edge ONTs, the group information of the STAs connected to the plurality of edge ONTs.

According to the solution provided in this application, the primary ONT determines, based on the channel matrices between the edge ONTs and the STAs, the group information of the STAs connected to the plurality of edge ONTs. When resources are scheduled for the STAs, the resources are scheduled for the STAs based on the group information of the STAs, and the interference between the STAs is considered, so that the interference between the STAs can be reduced.

In a possible implementation, the first uplink scheduling request further includes a sending start time point and a sending end time point that are determined by an edge ONT to which the second device belongs, the sending start time point is a time point at which the STA starts sending of the uplink data, and the sending end time point is a time point at which the STA ends sending of the uplink data. The method further includes: The first device sends, based on the sending start time point and the sending end time point, a second uplink bandwidth allocation message to the edge ONT to which the second device belongs, where a time point at which the second uplink bandwidth allocation message is transmitted to the edge ONT to which the second device belongs is not later than a time point at which the uplink data is transmitted to the edge ONT to which the second device belongs, and an uplink resource indicated by the second uplink bandwidth allocation message is used by the edge ONT to which the second device belongs to send the uplink data to the first device.

According to the solution provided in this application, the first uplink scheduling request further includes the sending start time point and the sending end time point that are determined by the edge ONT to which the second device belongs. In this way, after receiving the first uplink scheduling request, the primary ONT may allocate, based on the sending start time point and the sending end time point, the resource in advance to the edge ONT to which the second device belongs, where the resource is used by the edge ONT to which the second device belongs to send the uplink data of the second device to the primary ONT. This can reduce a transmission delay of the uplink data.

In a possible implementation, the method further includes: The first device determines, based on time points at which the first uplink buffer information and the first uplink bandwidth allocation message are provided, a time point at which a second uplink scheduling request is sent, where the second uplink scheduling request is for requesting, from the first device, a resource used to send the uplink data to an OLT, and the time point is earlier than a time point at which the uplink data is transmitted to the first device. The first device sends the second uplink scheduling request to the OLT at the time point. The first device receives a third uplink bandwidth allocation message sent by the OLT. The first device sends the uplink data to the OLT by using an uplink resource indicated by the third uplink bandwidth allocation message.

According to the solution provided in this application, the first device determines, based on the time points at which the first uplink buffer information and the first uplink bandwidth allocation message are provided, the time point at which the second uplink scheduling request is sent, where the time point is earlier than the time point at which the uplink data is transmitted to the first device. In this way, because the time point at which the uplink data is transmitted to the first device can be estimated, the first device can request the resource from the OLT in advance, and the uplink data can be immediately sent to the OLT after arriving at the first device. This can reduce a data transmission delay.

In a possible implementation, the first device is an OLT, the second device is a STA, the plurality of devices are STAs connected to a plurality of edge ONTs, and the plurality of edge ONTs access the OLT through primary ONTs. The method further includes: The first device receives channel matrices, between the plurality of edge ONTs and the STAs connected to the plurality of edge ONTs, sent by the plurality of edge ONTs. That the first device determines group information of the plurality of devices based on the information about the interference between the plurality of devices connected to the first device includes: The first device determines, based on the channel matrices between the plurality of edge ONTs connected to the first device and the STAs connected to the plurality of edge ONTs, the group information of the STAs connected to the plurality of edge ONTs.

According to the solution provided in this application, the OLT determines, based on the channel matrices between the edge ONTs and the STAs, the group information of the STAs connected to the plurality of edge ONTs. When resources are scheduled for the STAs, the resources are scheduled for the STAs based on the group information of the STAs, and the interference between the STAs is considered, so that the interference between the STAs can be reduced.

In a possible implementation, that the first device generates a first uplink bandwidth allocation message based on information about interference between a plurality of devices connected to the first device and the first uplink buffer information includes: The first device generates the first uplink bandwidth allocation message based on the information about the interference between the plurality of devices connected to the first device, the first uplink buffer information, and a service priority of the uplink data.

According to the solution provided in this application, when the uplink resource is allocated to the second device, the service priority of the uplink data is further considered. Therefore, data with a high service priority can be preferentially sent.

In a possible implementation, the uplink resource indicated by the first uplink bandwidth allocation message is a space domain resource and a time domain resource, or a frequency domain resource and a time domain resource. In this way, when transmitting data to the edge ONT, the STA may use a time-space resource or a time-frequency resource.

According to a second aspect, this application provides a transmission scheduling method, applied to a third device connected to a first device and a second device. The method includes: The third device sends, to the first device, interference information obtained by the third device. The third device sends a first uplink scheduling request of the second device to the first device based on uplink data to be sent by the second device, where the first uplink scheduling request includes first uplink buffer information, and the first uplink buffer information is determined based on the uplink data. The third device receives a first uplink bandwidth allocation message sent by the first device based on the interference information, and notifies the second device of an uplink resource indicated by the first uplink bandwidth allocation message. The third device receives the uplink data sent by the second device by using the uplink resource, and sends the uplink data to the first device.

According to the solution provided in this application, the third device provides, to the first device, the interference information obtained by the third device. The third device is connected to the second device. The third device sends the first uplink scheduling request of the second device to the first device based on the uplink data to be sent by the second device. The third device receives the first uplink bandwidth allocation message sent by the first device based on the interference information, and notifies the second device of the uplink resource indicated by the first uplink bandwidth allocation message. The second device sends the uplink data to the third device by using the uplink resource. The third device receives the uplink data sent by the second device by using the uplink resource, and sends the uplink data to the first device. In this way, when the second device requests the resource from the first device, the first device may schedule the resource for the second device based on the interference information provided by the third device. Therefore, when the first device is connected to a plurality of devices, the first device can schedule the resource for the second device. In addition, because the information about the interference between the plurality of devices connected to the first device is considered, the interference can be avoided as much as possible during resource scheduling, so that a higher data transmission success rate is ensured.

In a possible implementation, the first device is a primary ONT or an OLT, the second device is a STA, the third device is an edge ONT accessed by the second device, and the interference information is a channel matrix between the third device and the STA connected to the third device. Alternatively, the first device is an OLT, the second device is a terminal device STA, the third device is an edge ONT accessed by the second device, and the interference information is information about interference between the third device and a plurality of edge ONTs accessing the OLT. Alternatively, the first device is an OLT, the second device is a STA, the third device is a primary ONT accessed by the second device, and the interference information is information about interference between the third device and a plurality of primary ONTs accessing the OLT. In this way, the transmission scheduling method may be applied to fiber to the room (fiber to the room, FTTR) networking.

In a possible implementation, the first device is a primary ONT, the second device is a STA, and the third device is an edge ONT accessed by the second device. The method further includes: The third device determines a sending start time point and a sending end time point based on the uplink data, where the sending start time point is a time point at which the STA starts sending of the uplink data, and the sending end time point is a time point at which the STA ends sending of the uplink data. The third device sends a third uplink scheduling request to the first device based on the uplink data, the sending start time point, and the sending end time point, where the third uplink scheduling request is for requesting the first device to allocate, to the third device, a resource used to transmit the uplink data to the first device. The third device receives a second uplink bandwidth allocation message sent by the first device. The sending the uplink data to the first device includes: sending the uplink data to the first device by using a resource indicated by the second uplink bandwidth allocation message.

According to the solution provided in this application, when the primary ONT schedules the resource for the STA, the primary ONT may alternatively schedule the resource for the third device in advance, so that the data transmitted from the STA to the edge ONT can be transmitted to the primary ONT without waiting. Therefore, a data transmission delay can be reduced.

In a possible implementation, the third device determines, based on the uplink data, the sending start time point, and the sending end time point, a time point at which a third uplink scheduling request is sent, where the time point indicates a shortest delay in which the uplink data arrives at the first device. The third device sends the third uplink scheduling request to the first device at the time point. In this way, because the time point at which the third uplink scheduling request is sent indicates the shortest delay in which the uplink data arrives at the first device, a data transmission delay can be reduced.

According to a third aspect, a transmission scheduling method is provided. The method includes: A first device obtains information about interference between a plurality of devices connected to the first device. The first device determines, based on the interference information, downlink data to be sent this time and a fourth device to which the downlink data belongs in the plurality of devices, where interference caused when a plurality of fourth devices transmit the downlink data is less than a target threshold. The first device sends the downlink data to the fourth device.

According to the solution provided in this application, the first device may determine, based on the information about the interference between the plurality of connected devices, the downlink data to be sent this time, and then send the downlink data. When the downlink data to be sent this time belongs to the plurality of devices, the interference caused by transmission of the downlink data is less than the target threshold. In this way, when the downlink data is sent, the interference information is considered, so that interference to the downlink data sent this time is small. This improves a data transmission success rate.

In a possible implementation, that the first device determines, based on the interference information, downlink data to be sent this time and a fourth device to which the downlink data belongs in the plurality of devices includes: The first device determines group information of the plurality of devices based on the interference information, where interference caused when devices belonging to a same group transmit data by using a same resource is less than the target threshold. The first device determines, based on the group information, the downlink data to be sent this time and the fourth device to which the downlink data belongs in the plurality of devices.

According to the solution provided in this application, the first device may determine the group information of the plurality of devices based on the interference information, and then determine, based on the group information, the downlink data to be sent this time. In this way, because interference caused when devices in a group transmit data by using a same resource is less than the target threshold, interference caused by sending of the downlink data can be reduced by sending the downlink data based on the group information.

In a possible implementation, the first device is an OLT, the fourth device is a STA, the plurality of devices are a plurality of primary ONTs, the plurality of primary ONTs access the OLT, and the fourth device accesses a primary ONT through an edge ONT. The method further includes: The first device receives information, about interference between edge ONTs connected to the plurality of primary ONTs, sent by the plurality of primary ONTs, where the information about the interference between the connected edge ONTs includes one or more of an RSSI, a channel occupancy ratio, or a channel occupancy spacing. The first device determines strength of interference between the plurality of primary ONTs based on the information about the interference between the edge ONTs connected to the plurality of primary ONTs. That the first device determines group information of the plurality of devices based on the interference information includes: The first device determines the group information of the plurality of primary ONTs based on the strength of the interference between the plurality of primary ONTs connected to the first device.

According to the solution provided in this application, the OLT determines the strength of the interference between the plurality of primary ONTs based on the information about the interference between the edge ONTs connected to the primary ONTs, and determines the group information of the plurality of primary ONTs based on the strength of the interference between the plurality of primary ONTs. In this way, because different ONTs belong to different homes, primary ONTs of different homes may be grouped, so that interference between the homes can be reduced during downlink data transmission.

In a possible implementation, the first device is a primary ONT or an OLT, the fourth device is a STA, the plurality of devices are STAs connected to edge ONTs, and the primary ONT is connected to the STAs through the edge ONTs. The method further includes: The first device receives channel matrices, between the plurality of edge ONTs and the STAs connected to the plurality of edge ONTs, sent by the plurality of edge ONTs. That the first device determines group information of the plurality of devices based on the interference information includes: The first device determines, based on the channel matrices between the plurality of edge ONTs and the STAs connected to the plurality of edge ONTs, the group information of the STAs connected to the plurality of edge ONTs. The method further includes: The first device determines a first downlink bandwidth allocation message based on the group information of the STAs connected to the plurality of edge ONTs, where the first downlink bandwidth allocation message indicates a resource occupied when the downlink data is transmitted to the fourth device from an edge ONT to which the fourth device belongs. The first device sends the first downlink bandwidth allocation message to the edge ONT to which the fourth device belongs.

According to the solution provided in this application, the primary ONT determines, based on the channel matrices between the edge ONTs and the STAs, the group information of the STAs connected to the plurality of edge ONTs. Alternatively, the OLT determines, based on the channel matrices between the edge ONTs and the STAs, the group information of the STAs connected to the plurality of edge ONTs. In this way, because the group information of the STAs is considered when downlink resources are allocated to the STAs, interference between the STAs can be reduced.

In a possible implementation, that the first device determines, based on the interference information, downlink data to be sent this time and a fourth device to which the downlink data belongs in the plurality of devices includes: The first device determines, based on the group information, and an air interface status between the STA to which the downlink data belongs and the edge ONT, the downlink data to be sent this time and the fourth device to which the downlink data belongs in the plurality of edge ONTs.

In this way, when the downlink data to be sent this time is determined, the air interface status is further considered, so that the data transmitted to the edge ONT can be immediately transmitted to the STA. This can reduce a data transmission delay.

According to a fourth aspect, this application provides a transmission scheduling apparatus. The apparatus includes one or more modules, configured to perform the method according to the first aspect.

According to a fifth aspect, this application provides a transmission scheduling apparatus. The apparatus includes one or more modules, configured to perform the method according to the second aspect.

According to a sixth aspect, this application provides a transmission scheduling apparatus. The apparatus includes one or more modules, configured to perform the method according to the third aspect.

According to a seventh aspect, this application provides a transmission scheduling computing device. The computing device includes a processor and a memory. The memory stores computer instructions. The processor executes the computer instructions, to implement the method according to the first aspect and the possible implementations of the first aspect.

According to an eighth aspect, this application provides a computer-readable storage medium. The computer-readable storage medium stores computer instructions. When the computer instructions in the computer-readable storage medium are executed by a computing device, the computing device is enabled to perform the method according to the first aspect and the possible implementations of the first aspect, or the computing device is enabled to implement functions of the apparatus according to the fourth aspect and the possible implementations of the fourth aspect.

According to a ninth aspect, this application provides a computer program product including instructions. When the computer program product runs on a computing device, the computing device is enabled to perform the method according to the first aspect and the possible implementations of the first aspect, or the computing device is enabled to implement functions of the apparatus according to the second aspect and the possible implementations of the second aspect.

According to a tenth aspect, this application provides a transmission scheduling computing device. The computing device includes a processor and a memory. The memory stores computer instructions. The processor executes the computer instructions, to implement the method according to the second aspect and the possible implementations of the second aspect.

According to an eleventh aspect, this application provides a computer-readable storage medium. The computer-readable storage medium stores computer instructions. When the computer instructions in the computer-readable storage medium are executed by a computing device, the computing device is enabled to perform the method according to the second aspect and the possible implementations of the second aspect, or the computing device is enabled to implement functions of the apparatus according to the fifth aspect and the possible implementations of the fifth aspect.

According to a twelfth aspect, this application provides a computer program product including instructions. When the computer program product runs on a computing device, the computing device is enabled to perform the method according to the second aspect and the possible implementations of the second aspect, or the computing device is enabled to implement functions of the apparatus according to the fifth aspect and the possible implementations of the fifth aspect.

According to a thirteenth aspect, this application provides a transmission scheduling computing device. The computing device includes a processor and a memory. The memory stores computer instructions. The processor executes the computer instructions, to implement the method according to the third aspect and the possible implementations of the third aspect.

According to a fourteenth aspect, this application provides a computer-readable storage medium. The computer-readable storage medium stores computer instructions. When the computer instructions in the computer-readable storage medium are executed by a computing device, the computing device is enabled to perform the method according to the third aspect and the possible implementations of the third aspect, or the computing device is enabled to implement functions of the apparatus according to the sixth aspect and the possible implementations of the sixth aspect.

According to a fifteenth aspect, this application provides a computer program product including instructions. When the computer program product runs on a computing device, the computing device is enabled to perform the method according to the third aspect and the possible implementations of the third aspect, or the computing device is enabled to implement functions of the apparatus according to the sixth aspect and the possible implementations of the sixth aspect.

According to a sixteenth aspect, this application provides a transmission scheduling system, including the transmission scheduling apparatus according to the fourth aspect and the transmission scheduling apparatus according to the fifth aspect.

### BRIEF DESCRIPTION OF DRAWINGS

FIG. 1 is a schematic diagram of FTTR networking according to an example embodiment of this application;
FIG. 2 is a diagram of an architecture of a transmission scheduling system according to an example embodiment of this application;
FIG. 3 is a schematic diagram of a structure of a first device according to an example embodiment of this application;
FIG. 4 is a schematic diagram of a structure of a third device according to an example embodiment of this application;
FIG. 5 is a schematic flowchart of a method for performing uplink transmission scheduling by a first device according to an example embodiment of this application;
FIG. 6 is a schematic flowchart of a method for performing uplink transmission scheduling by a third device according to an example embodiment of this application;
FIG. 7 is a schematic flowchart of a method for performing interactive uplink transmission scheduling according to an example embodiment of this application;
FIG. 8 is a diagram of an architecture in which an OLT schedules an uplink resource for a STA according to an example embodiment of this application;
FIG. 9 is a flowchart in which an OLT schedules an uplink resource for a STA according to an example embodiment of this application;
FIG. 10 is a diagram of an architecture in which a primary ONT schedules an uplink resource for a STA according to an example embodiment of this application;
FIG. 11 is a flowchart in which a primary ONT schedules an uplink resource for a STA according to an example embodiment of this application;
FIG. 12 is a flowchart in which a primary ONT schedules an uplink resource for a STA according to an example embodiment of this application;
FIG. 13 is a flowchart in which an OLT schedules an uplink resource for a STA according to an example embodiment of this application;
FIG. 14 is a schematic flowchart of a downlink transmission scheduling method according to an example embodiment of this application;
FIG. 15 is a schematic flowchart of a method for transmitting data by an OLT to a STA according to an example embodiment of this application;
FIG. 16 is a schematic diagram of group information of primary ONTs according to an example embodiment of this application;
FIG. 17 is a schematic diagram of a structure of a transmission scheduling apparatus according to an example embodiment of this application;
FIG. 18 is a schematic diagram of a structure of a transmission scheduling apparatus according to an example embodiment of this application;
FIG. 19 is a schematic diagram of a structure of a transmission scheduling apparatus according to an example embodiment of this application; and
FIG. 20 is a schematic diagram of a structure of a transmission scheduling apparatus according to an example embodiment of this application.

### DESCRIPTION OF EMBODIMENTS

To make objectives, technical solutions, and advantages of this application clearer, the following further describes implementations of this application in detail with reference to the accompanying drawings.

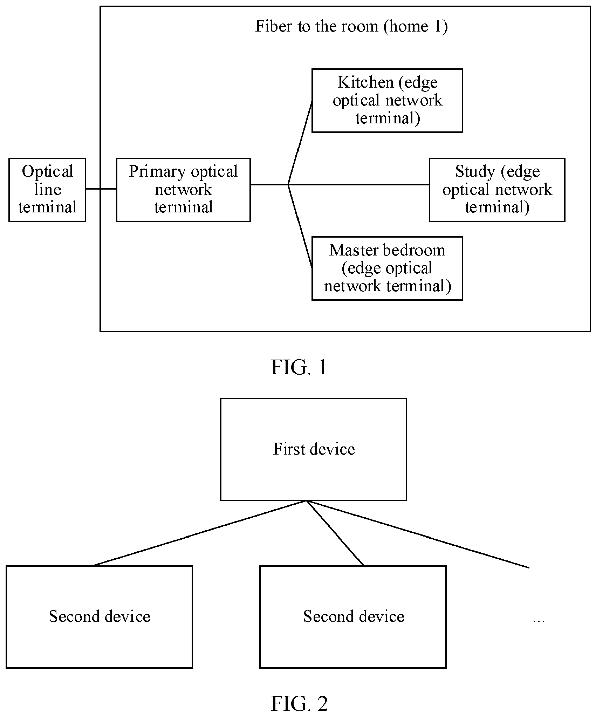

For ease of understanding of embodiments of this application, the following first describes concepts of terms used.
1. FTTR is a networking mode in which an optical fiber is connected to a room. The networking mode is as follows: An OLT is deployed in a center office (center office, CO), and a network is connected to each home by using an optical fiber. A home ingress gateway may be referred to as a primary ONT, and the primary ONT connects, by using an optical fiber, the network to an edge ONT deployed in each room. For example, as shown in FIG. 1, an OLT is connected to a primary ONT of a home 1. The primary ONT is connected to an edge ONT of a kitchen in the home 1 by using an optical fiber, to an edge ONT of a master bedroom in the home 1 by using an optical fiber, and to an edge ONT of a study in the home 1 by using an optical fiber. For another example, an OLT is connected to primary ONTs of a plurality of homes (for example, n homes), and each primary ONT is connected to an edge ONT of a home to which the primary ONT belongs.
2. Multiple-input multiple-output (multiple-input multiple-output, MIMO) means that a plurality of transmitting antennas and a plurality of receiving antennas are respectively used at a transmitting end and a receiving end, so that a signal is transmitted and received by using the plurality of antennas at the transmitting end and the receiving end. This improves communication quality.

In a related technology, only data transmission between two devices is considered, and how to perform resource scheduling when data is transmitted between one device and a plurality of devices is not involved. To resolve this problem, embodiments of this application provide a transmission scheduling method. The method may be performed by a first device and/or a third device. As shown in FIG. 2, the first device is indirectly or directly connected to a plurality of second devices. The first device may schedule a resource for the second device, where the resource is used by the second device to transmit data to the first device. For example, the transmission scheduling method in this application may be applied to the FTTR. The first device may be a primary ONT in the FTTR, and the second device may be a STA connected to an edge ONT in the FTTR. For another example, the transmission scheduling method in this application may be applied to the FTTR. The first device may be an OLT in the FTTR, and the second device may be a STA connected to an edge ONT in the FTTR.

In embodiments of this application, functions of an optical modem and an access point (access point, AP) are integrated into the edge ONT. Alternatively, the edge ONT includes only a function of an optical modem, and an AP is independently deployed. In the following descriptions, an example in which the edge ONT integrates the functions of the optical modem and the access point is used.

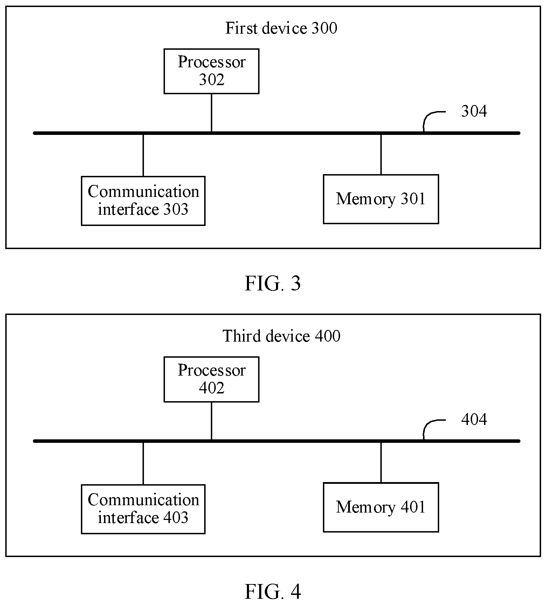

As shown in FIG. 3, a schematic diagram of a structure of a first device 300 is further provided. The first device 300 includes a memory 301, a processor 302, a transceiver 303, and a bus 304. The memory 301, the processor 302, and the transceiver 303 are communicatively connected to each other through the bus 304.

The memory 301 may be a read-only memory (read-only memory, ROM), a static storage device, a dynamic storage device, or a random access memory (random access memory, RAM). The memory 301 may store computer instructions. When the computer instructions stored in the memory 301 are executed by the processor 302, the processor 302 and the transceiver 303 are configured to perform the transmission scheduling method. The memory 301 may further store data. For example, a part of the memory 301 is configured to: store data required for performing the transmission scheduling method, and store intermediate data or result data in a program execution process.

The processor 302 may use a general-purpose central processing unit (central processing unit, CPU), an application-specific integrated circuit (application-specific integrated circuit, ASIC), a graphics processing unit (graphics processing unit, GPU), or any combination thereof. The processor 302 may include one or more chips.

The transceiver 303 uses a transceiver module, for example but not for limitation, a transceiver, to implement communication between the first device 300 and another device or a communication network.

The bus 304 may include a path for transmitting information between components (for example, the memory 301, the processor 302, and the transceiver 303) of the first device 300.

As shown in FIG. 4, a schematic diagram of a structure of a third device 400 is further provided. The third device 400 includes a memory 401, a processor 402, a transceiver 403, and a bus 404. The memory 401, the processor 402, and the transceiver 403 are communicatively connected to each other through the bus 404.

The memory 401 may be a ROM, a static storage device, a dynamic storage device, or a RAM. The memory 401 may store computer instructions. When the computer instructions stored in the memory 401 are executed by the processor 402, the processor 402 and the transceiver 403 are configured to perform the transmission scheduling method. The memory 401 may further store data. For example, a part of the memory 401 is configured to: store data required for performing the transmission scheduling method, and store intermediate data or result data in a program execution process.

The processor 402 may be a general-purpose CPU, an ASIC, a GPU, or any combination thereof. The processor 402 may include one or more chips.

The transceiver 403 uses a transceiver module, for example but not for limitation, a transceiver, to implement communication between the third device 400 and another device or a communication network.

The bus 404 may include a path for transmitting information between components (for example, the memory 401, the processor 402, and the transceiver 403) of the third device 400.

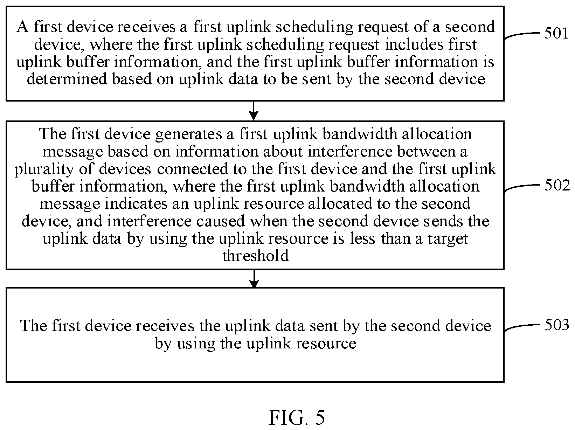

When the transmission scheduling method is executed by the first device, in an uplink scheduling process, as shown in FIG. 5, a processing procedure of the method is as follows:
Step 501: A first device receives a first uplink scheduling request of a second device, where the first uplink scheduling request includes first uplink buffer information, and the first uplink buffer information is determined based on uplink data to be sent by the second device.

In this embodiment, the first device receives the first uplink scheduling request of the second device, determines to schedule a resource for the second device, and obtains the first uplink buffer information by parsing the first uplink scheduling request.

Step 502: The first device generates a first uplink bandwidth allocation message based on information about interference between a plurality of devices connected to the first device and the first uplink buffer information, where the first uplink bandwidth allocation message indicates an uplink resource allocated to the second device, and interference caused to the second device when the second device sends the uplink data by using the uplink resource is less than a target threshold.

In this embodiment, the first device obtains the latest information about the interference between the plurality of devices connected to the first device, and generates the first uplink bandwidth allocation message based on the interference information and the first uplink buffer information. The first device provides, to the second device, the uplink resource that is indicated by the first uplink bandwidth allocation message and that is used to transmit the uplink data of the second device.

Step 503: The first device receives the uplink data sent by the second device by using the uplink resource.

In this embodiment, the second device obtains the uplink resource provided by the first device. The second device sends the uplink data to the second device by using the uplink resource. The first device receives the uplink data sent by the second device by using the uplink resource.

In this way, when the first device is connected to the plurality of devices, the resource may be scheduled for the second device, and the interference information is considered, so that interference during data transmission can be reduced.

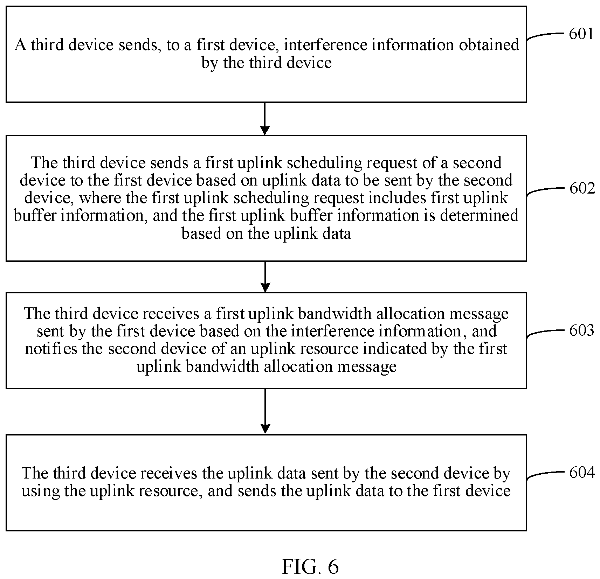

The third device is accessed by the second device, and accesses the first device. In other words, the third device is connected to the first device and the second device. When the transmission scheduling method is performed by the third device, as shown in FIG. 6, a processing procedure of the transmission scheduling method is as follows:
Step 601: A third device sends, to a first device, interference information obtained by the third device.

In this embodiment, the third device sends, to the first device, the interference information obtained by the third device.

Step 602: The third device sends a first uplink scheduling request of a second device to the first device based on uplink data to be sent by the second device, where the first uplink scheduling request includes first uplink buffer information, and the first uplink buffer information is determined based on the uplink data.

In this embodiment, the second device sends, to the third device, related information (for example, a data amount of the to-be-sent uplink data) of the uplink data to be sent by the second device. The third device may generate the first uplink scheduling request based on the uplink data to be sent by the second device. The third device sends the first uplink scheduling request to the first device.

Step 603: The third device receives a first uplink bandwidth allocation message sent by the first device based on the interference information, and notifies the second device of an uplink resource indicated by the first uplink bandwidth allocation message.

In this embodiment, the third device may receive the first uplink bandwidth allocation message sent by the first device based on the interference information, so that the third device can obtain, from the first uplink bandwidth allocation message, the uplink resource scheduled for the first device, and notify the second device of the uplink resource.

Step 604: The third device receives the uplink data sent by the second device by using the uplink resource, and sends the uplink data to the first device.

In this embodiment, the second device sends the uplink data to the third device by using the uplink resource, and the third device sends the uplink data to the first device.

In this way, the uplink resource may be scheduled based on the interference information, so that interference during data transmission is reduced.

The following further describes the procedures shown in FIG. 5 and FIG. 6.

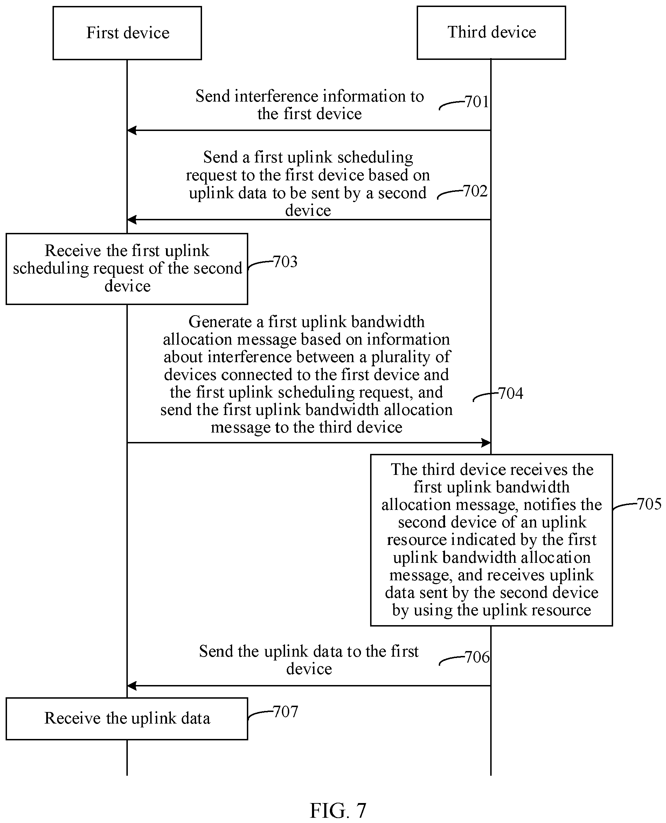

As shown in FIG. 7, the following describes an interaction procedure between the first device and the third device in the uplink scheduling process in the transmission scheduling method.

Step 701: A third device sends obtained interference information to a first device, where a second device accesses the first device through the third device.

In this embodiment, the third device periodically obtains interference information of a device that belongs to a same level as the third device, and sends the interference information to the first device. Alternatively, when receiving an uplink scheduling request sent by the second device, the third device obtains interference information of a device that belongs to a same level as the third device, and sends the interference information to the first device. For example, the third device is an edge ONT, and the interference information is information about interference between the edge ONT and another edge ONT.

Step 702: The third device sends a first uplink scheduling request to the first device based on uplink data to be sent by the second device, where the first uplink scheduling request includes first uplink buffer information, and the first uplink buffer information is determined based on the uplink data.

In this embodiment, the second device may send, to the third device, related information (for example, a data amount) of the uplink data to be transmitted this time. The third device receives the related information, and generates the first uplink scheduling request of the second device based on the related information, where the first uplink scheduling request includes the first uplink buffer information, and the first uplink scheduling request is for requesting, from the first device, a resource used to transmit the to-be-sent uplink data. The third device sends the first uplink scheduling request to the first device.

Step 703: The first device receives the first uplink scheduling request of the second device sent by the third device.

In this embodiment, the first device receives the first uplink scheduling request of the second device sent by the third device, determines to schedule the resource for the second device, and obtains the first uplink buffer information by parsing the first uplink scheduling request.

Step 704: The first device generates a first uplink bandwidth allocation message based on information about interference between a plurality of devices connected to the first device and the first uplink buffer information, and sends the first uplink bandwidth allocation message to the third device, where the first uplink bandwidth allocation message indicates an uplink resource allocated to the second device, and interference caused to the second device when the second device sends the uplink data by using the uplink resource is less than a target threshold.

The target threshold is a preset value. When interference is less than the target threshold, data receiving of a device is not affected.

In this embodiment, the first device obtains the latest information about the interference between the plurality of devices connected to the first device, and determines, based on the interference information and the first uplink buffer information, the resource scheduled for the second device. Then, the first device generates the first uplink bandwidth allocation message, where the first uplink bandwidth allocation message includes an identifier of the resource scheduled for the second device. The first device sends the first uplink bandwidth allocation message to the third device.

It should be noted herein that each time after receiving related information of uplink data transmitted by one device, the third device may request, from the first device, a resource for the device, where the first uplink bandwidth allocation message indicates an uplink resource allocated to only one device; or when receiving related information of uplink data transmitted by a plurality of devices, the third device requests, from the first device, resources used for all uplink data that currently needs to be transmitted to the first device, where the first uplink bandwidth allocation message indicates uplink resources allocated to the plurality of devices, and the uplink resources used by the devices are distinguished by using identifiers of the devices. In the former possibility, the first uplink scheduling request is used for one device. In the latter possibility, the first uplink scheduling request is used for a plurality of devices.

In a possible implementation, the first device may group, based on the interference information, the plurality of devices connected to the first device, and schedule the resource for the second device based on the group. Processing in step 704 may be as follows:
the first device determines group information of the plurality of devices based on the information about the interference between the plurality of devices connected to the first device; and the first device generates the first uplink bandwidth allocation message based on the group information of the plurality of devices and the first uplink buffer information.

Interference caused when devices belonging to a same group transmit data by using a same resource is less than the target threshold. The target threshold is a preset value. When interference is less than the target threshold, data receiving of a device is not affected.

In this embodiment, the first device groups, based on the information about the interference between the plurality of devices connected to the first device, devices that do not interfere with each other into a group, to obtain the group information of the plurality of devices. Devices in each group transmit data by using a same frequency domain resource in a same time period, and interference is less than the target threshold. Alternatively, devices in each group transmit data by using a same space domain resource in a same time period, and interference is less than the target threshold.

Then, based on the group information of the plurality of devices and the first uplink buffer information, the first device transmits, by using a same resource, data of devices that belong to a same group, and transmits, by using different resources, data of devices that do not belong to a same group. In this way, the first device can determine the uplink resource scheduled for the second device. Then, the first device generates the first uplink bandwidth allocation message, where the first uplink bandwidth allocation message includes an identifier of the uplink resource. The first device sends the first uplink bandwidth allocation message to the third device.

In a possible implementation, when scheduling the resource for the second device, the first device further considers a service priority of the to-be-sent uplink data. Processing in step 704 is as follows:
the first device generates the first uplink bandwidth allocation message based on the information about the interference between the plurality of devices connected to the first device, the first uplink buffer information, and the service priority of the uplink data.

The service priority is determined based on a service type. The service type may include a text type, a voice type, a video type, and the like. Data of various service types has different service priorities. For example, service priorities of uplink data of the voice type, the video type, and the text type may be in descending order.

In this embodiment, when determining the first uplink buffer information, the second device may further add the service type of the to-be-sent uplink data to the first uplink buffer information, or directly send the first uplink buffer information and the service type to the third device. The third device adds the service type to the first uplink scheduling request, where the first uplink scheduling request includes the service type and the first uplink buffer information. The first device may obtain the service type of the uplink data to be sent by the second device, and determine the corresponding service priority based on the service type.

Alternatively, the second device stores a correspondence between the service type and the service priority. The second device determines, in the correspondence, the service type of the to-be-sent uplink data, and determines the service priority corresponding to the service type. The second device may alternatively add the service priority to the first uplink buffer information, or directly sends the first uplink buffer information and the service priority to the third device. The third device may further add the service priority to the first uplink scheduling request, where the first uplink scheduling request includes the service priority and the first uplink buffer information.

Then, according to a rule that data with a high service priority is preferentially transmitted and data with small interference between devices is transmitted by using a same resource, the first device determines, based on the service priority, the first uplink buffer information, and the information about the interference between the plurality of devices connected to the first device, the uplink resource scheduled for the second device. Then, the first device generates the first uplink bandwidth allocation message, where the first uplink bandwidth allocation message includes the identifier of the uplink resource. The first device sends the first uplink bandwidth allocation message to the third device.

In this way, because the service priority is considered during resource scheduling, a resource may be preferentially scheduled for data with a high service priority, and the data with the high service priority may be preferentially transmitted.

Step 705: The third device receives the first uplink bandwidth allocation message sent by the first device, and notifies the second device of the uplink resource indicated by the first uplink bandwidth allocation message.

In this embodiment, the third device receives the first uplink bandwidth allocation message sent by the first device, so that the third device can obtain, from the first uplink bandwidth allocation message, the identifier of the uplink resource allocated to the second device. The third device notifies the second device of the identifier of the uplink resource.

Step 706: The third device receives the uplink data sent by the second device by using the uplink resource, and sends the uplink data to the first device.

In this embodiment, the second device receives the identifier of the uplink resource sent by the third device, so that the second device can determine, by using the identifier of the uplink resource, the uplink resource indicated by the identifier. Then, the second device sends the uplink data to the third device by using the uplink resource. The third device receives the uplink data sent by the second device.

Optionally, the uplink resource indicated by the first uplink bandwidth allocation message is a space domain resource and a time domain resource, or a frequency domain resource and a time domain resource.

Step 707: The first device receives the data sent by the second device by using the uplink resource.

In this embodiment, the first device receives the uplink data of the second device sent by the third device.

In this way, according to this embodiment of this application, the first device may schedule the resource for the second device based on the information about the interference between the plurality of devices connected to the first device. Therefore, when the first device is connected to the plurality of devices, the first device can schedule the resource for the second device. In addition, because the information about the interference between the plurality of devices connected to the first device is considered, the interference can be avoided as much as possible during resource scheduling, so that a higher data transmission success rate is ensured.

The following describes application of the uplink transmission scheduling method to FTTR.

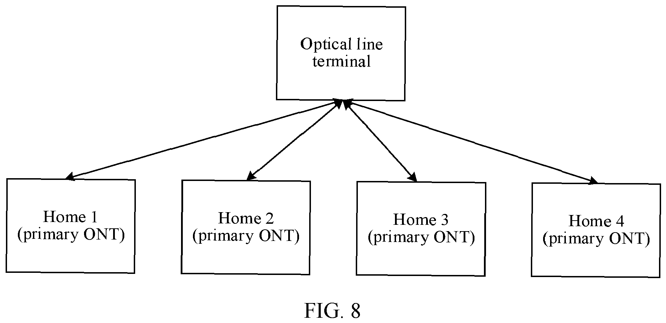

In a first possible scenario, a first device is an OLT in the FTTR, a second device is a first STA in the FTTR, a plurality of devices connected to the first device are all primary ONTs, the plurality of primary ONTs belong to different homes, a third device is a first primary ONT accessed by the first STA, the first STA directly accesses a first edge ONT, and the first edge ONT accesses the first primary ONT. The OLT is connected to a primary ONT by using an optical fiber, the primary ONT is connected to an edge ONT by using an optical fiber, and the edge ONT is wirelessly connected to a STA. For example, as shown in FIG. 8, an OLT is connected to primary ONTs of four homes, which are respectively a primary ONT of a home 1, a primary ONT of a home 2, a primary ONT of a home 3, and a primary ONT of a home 4. A primary ONT of each home is connected to an edge ONT. Each edge ONT is connected to a STA, to provide a network transmission service for the STA.

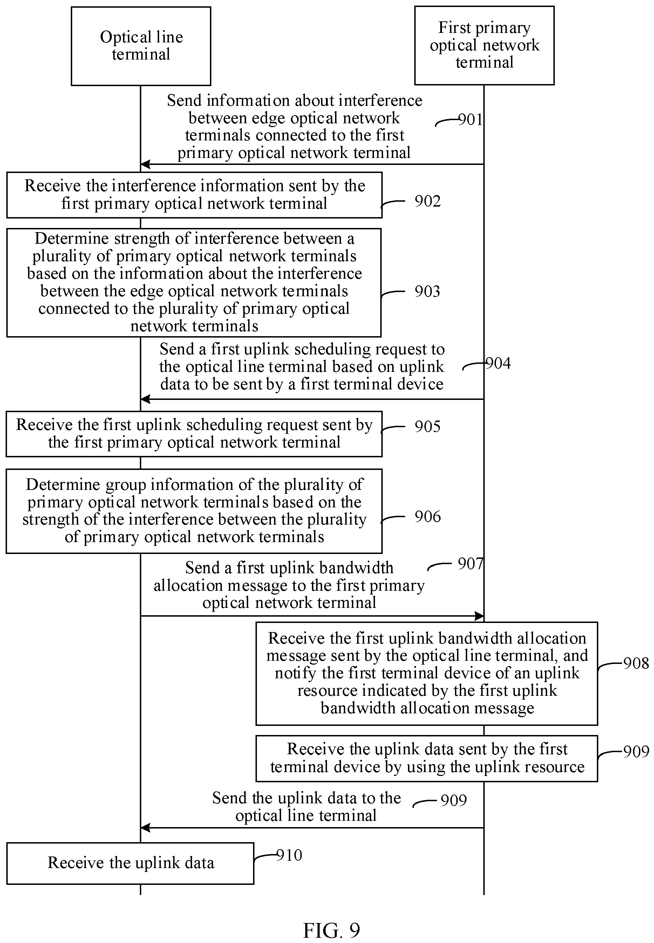

In the first possible scenario, a processing procedure is shown in FIG. 9.

Step 901: The plurality of primary ONTs send, to the OLT, information about interference between the edge ONTs connected to the plurality of primary ONTs, where the interference information includes one or more of an RSSI, a channel occupancy ratio, or a channel occupancy spacing.

The plurality of primary ONTs access the OLT.

In this embodiment, the edge ONTs connected to the plurality of primary ONTs may periodically broadcast probe messages to the outside. A probe message sent by an edge ONT includes address information of the edge ONT. For example, the address information is a media access control (media access control, MAC) address. An edge ONT that receives the probe message may record a correspondence between signal strength for receiving the probe message and the address information in the probe message, that is, record a correspondence between an RSSI and the address information in the probe message. In this way, each edge ONT can obtain an RSSI of another edge ONT for the edge ONT. In addition, within a preset statistical duration, the edge ONT detects a duration, in which the RSSI of the another edge ONT is greater than a first threshold, corresponding to the another edge ONT, and divides the duration by the preset statistical duration, to obtain a channel occupancy ratio of the another edge ONT recorded by the edge ONT. Herein, the channel occupancy ratio may be monitored periodically, or may be monitored continuously. This is not limited in this embodiment of this application. In addition, within a preset statistical duration, the edge ONT detects a time interval between two consecutive times that the RSSI of the another edge ONT is greater than a first threshold, and determines the time interval as a channel occupancy spacing. An average value of channel spacings corresponding to all other edge ONTs within a plurality of preset statistical durations is determined as a channel occupancy spacing of the another edge ONT recorded by the edge ONT. Herein, the channel occupancy spacing may be monitored periodically, or may be monitored continuously. This is not limited in this embodiment of this application.

In this way, information about interference between each edge ONT and another edge ONT is obtained. Each edge ONT sends the detected interference information to a primary ONT to which the edge ONT belongs.

After receiving the interference information sent by the connected edge ONT, the primary ONT may send the interference information to the OLT.

Herein, an example in which an edge ONT has a function of an AP is used for description. If the edge ONT does not have the function of the AP, a device for broadcasting probe information is the AP.

Step 902: The OLT receives the information, about the interference between the edge ONTs connected to the plurality of primary ONTs, sent by the plurality of primary ONTs.

Step 903: The OLT determines strength of interference between the plurality of primary ONTs based on the information about the interference between the edge ONTs connected to the plurality of primary ONTs.

In this embodiment, after obtaining the interference information sent by the edge ONTs connected to the plurality of primary ONTs, the OLT may obtain content included in the interference information. When the interference information includes an RSSI, the OLT may obtain RSSIs provided by edge ONTs connected to every two primary ONTs (represented by a primary ONT 1 and a primary ONT 2), and average RSSIs of edge ONTs connected to the primary ONT 2 in all edge ONTs connected to the primary ONT 1, to obtain strength of interference between the primary ONT 1 and the primary ONT 2. In this manner, strength of interference between every two primary ONTs in the plurality of primary ONTs is obtained.

Alternatively, when the interference information includes a channel occupancy ratio, the OLT may obtain channel occupancy ratios provided by edge ONTs connected to every two primary ONTs (represented by a primary ONT 1 and a primary ONT 2), and average channel occupancy ratios of edge ONTs connected to the primary ONT 2 in all edge ONTs connected to the primary ONT 1, to obtain strength of interference between the primary ONT 1 and the primary ONT 2. In this manner, strength of interference between every two primary ONTs in the plurality of primary ONTs is obtained.

Alternatively, when the interference information includes a channel occupancy spacing, the OLT may obtain channel occupancy spacings provided by edge ONTs connected to every two primary ONTs (represented by a primary ONT 1 and a primary ONT 2), and average channel occupancy spacings of edge ONTs connected to the primary ONT 2 in all edge ONTs connected to the primary ONT 1, to obtain strength of interference between the primary ONT 1 and the primary ONT 2. In this manner, strength of interference between every two primary ONTs in the plurality of primary ONTs is obtained.

When the interference information includes at least two of an RSSI, a channel occupancy ratio, and a channel occupancy spacing, the OLT may obtain strength of every two primary ONTs (represented by a primary ONT 1 and a primary ONT 2) in various types of interference information, and average the strength of the primary ONT 1 and the primary ONT 2 in the various types of interference information, to obtain strength of interference between the primary ONT 1 and the primary ONT 2. In this manner, strength of interference between every two primary ONTs in the plurality of primary ONTs is obtained.

Step 904: The first primary ONT sends a first uplink scheduling request to the OLT based on uplink data to be sent by the first STA, where the first uplink scheduling request includes first uplink buffer information.

Step 905: The OLT receives the first uplink scheduling request of the first STA.

Processing of step 904 and step 905 is the same as processing of step 702 and step 703. Details are not described herein again.

Step 906: The OLT determines group information of the plurality of primary ONTs based on the strength of the interference between the plurality of primary ONTs connected to the OLT.

In this embodiment, the OLT determines whether strength of interference between every two primary ONTs exceeds the first threshold. If the interference strength exceeds the first threshold, the two primary ONTs cannot be grouped into a same group. If the interference strength does not exceed the first threshold, the two ONTs may be grouped into a same group. In this manner, the OLT groups the plurality of primary ONTs, to obtain the group information of the plurality of primary ONTs.

It should be noted herein that, if there is small interference between the primary ONTs, and the primary ONTs do not interfere with each other, the primary ONTs may perform transmission independently, and may be grouped into one group. If there may be interference between the primary ONTs, but strength of the interference is small, by reducing a modulation order of transmission, the primary ONTs may perform transmission simultaneously, and may be grouped into one group. However, if there is large interference between the primary ONTs, the primary ONTs cannot perform transmission simultaneously, and cannot be grouped into one group.

Step 907: The OLT generates a first uplink bandwidth allocation message based on the group information of the plurality of primary ONTs and the first uplink buffer information, where interference caused when devices belonging to a same group transmit data is less than a target threshold.

Processing of step 907 is the same as processing of step 704. Details are not described herein again.

Step 908: The first primary ONT receives the first uplink bandwidth allocation message sent by the OLT, and notifies the first STA of an uplink resource indicated by the first uplink bandwidth allocation message.

In this embodiment, after receiving the first uplink bandwidth allocation message sent by the OLT, the first primary ONT notifies the first STA of the uplink resource to be used by the first STA.

The first STA may send uplink data to the first edge ONT by using the uplink resource. After receiving the uplink data, the first edge ONT requests a resource from the first primary ONT. The first primary ONT allocates the resource to the first edge ONT, where the resource is used by the first edge ONT to send the uplink data of the first STA to the first primary ONT.

Step 909: The first primary ONT receives the uplink data that is sent by the first STA by using the uplink resource indicated by the first uplink bandwidth allocation message, and sends the uplink data to the OLT.

In this embodiment, after receiving the uplink data, the first edge ONT requests a resource from the OLT. The OLT allocates the resource to the first primary ONT, where the resource is used by the first primary ONT to send the uplink data of the first STA to the OLT. Herein, the first primary ONT is connected to the OLT by using an optical fiber, and the resource used by the first primary ONT to send the uplink data to the OLT is a time domain resource and a frequency domain resource. The first edge ONT is connected to the first primary ONT by using an optical fiber, and the resource used by the first edge ONT to send the uplink data to the first primary ONT is a time domain resource and a frequency domain resource.

Step 910: The OLT receives the uplink data sent by the first primary ONT.

In this embodiment, the OLT receives the uplink data of the first STA sent by the first primary ONT. The OLT sends the uplink data to the outside, for example, to a core network.

It should be noted that FIG. 9 shows only interaction between the first primary ONT and the OLT. During application, the third device may alternatively be the first edge ONT accessed by the first STA.

In a possible implementation, in step 907, a service priority of the uplink data may be further considered. Processing in step 907 may be as follows:
the OLT generates the first uplink bandwidth allocation message based on the group information of the plurality of primary ONTs, the service priority of the uplink data, and the first uplink buffer information.

In this embodiment, the OLT generates the first uplink bandwidth allocation message based on the service priority of the uplink data, the first uplink buffer information, and the group information of the plurality of primary ONTs. Optionally, the OLT may preferentially schedule a resource for uplink data with a high service priority based on the service priority, and transmit the uplink data together with uplink data with less interference to the uplink data. In this manner, the first uplink bandwidth allocation message is generated. For example, the OLT preferentially allocates a same time domain resource and a same frequency domain resource, or allocates a same time domain resource and a same space domain resource to uplink data that has a high service priority and that is of STAs connected to primary ONTs that belong to a same group. Then, the OLT generates the first uplink bandwidth allocation message, where the first uplink bandwidth allocation message includes an identifier of the resource scheduled for the first STA. The OLT sends the first uplink bandwidth allocation message to the first STA. In this way, because the service priority is considered during resource scheduling, a resource may be preferentially scheduled for data with a high service priority, and the data with the high service priority may be preferentially transmitted.

In a possible implementation, after notifying the first STA of the uplink resource indicated by the first uplink bandwidth allocation message, the first primary ONT may request the uplink resource from the OLT, so that after the data of the first STA is transmitted to the first primary ONT, the first primary ONT can directly transmit the uplink data to the OLT without waiting.

In another possible implementation, after sending the first uplink bandwidth allocation message to the first primary ONT, the OLT estimates a time point at which the first STA arrives at the first primary ONT, and allocates the uplink resource to the first primary ONT before the time point, so that after the data of the first STA is transmitted to the first primary ONT, the first primary ONT can directly transmit the uplink data to the OLT without waiting.

In this way, because strength of the interference between the primary ONTs is considered when the OLT schedules uplink resources for the primary ONTs, data of STAs connected to different primary ONTs is not transmitted by using a same time domain resource and a same frequency domain resource, or data of STAs connected to different primary ONTs is not transmitted by using a same time domain resource and a same space domain resource. Therefore, interference caused when the STAs connected to different primary ONTs transmit data can be reduced. In addition, because the primary ONTs belong to various homes, it may also be considered that interference between the homes is reduced.

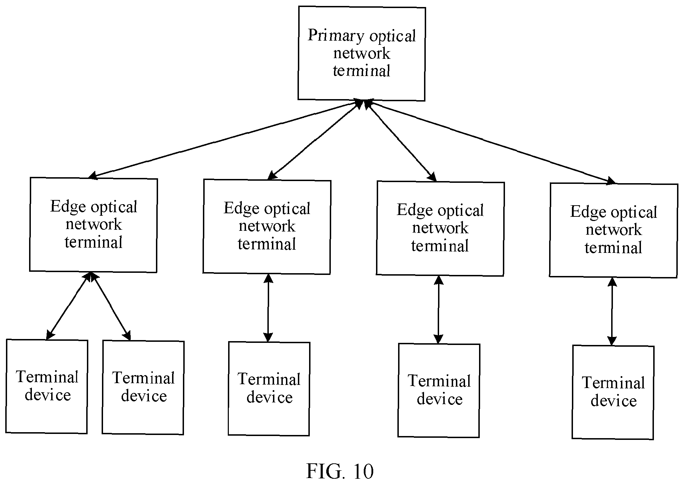

In a second possible scenario, a first device is a first primary ONT in the FTTR, a second device is a second STA in the FTTR, and a third device is a first edge ONT. A plurality of devices connected to the first device each are a STA connected to an edge ONT, but the plurality of devices belong to one home. The second STA accesses the first edge ONT, and the first edge ONT accesses the first primary ONT. The primary ONT is connected to an edge ONT by using an optical fiber, and the edge ONT is wirelessly connected to a STA. For example, as shown in FIG. 10, a primary ONT is connected to four edge ONTs. Each edge ONT is connected to a STA, to provide a network transmission service for the STA.

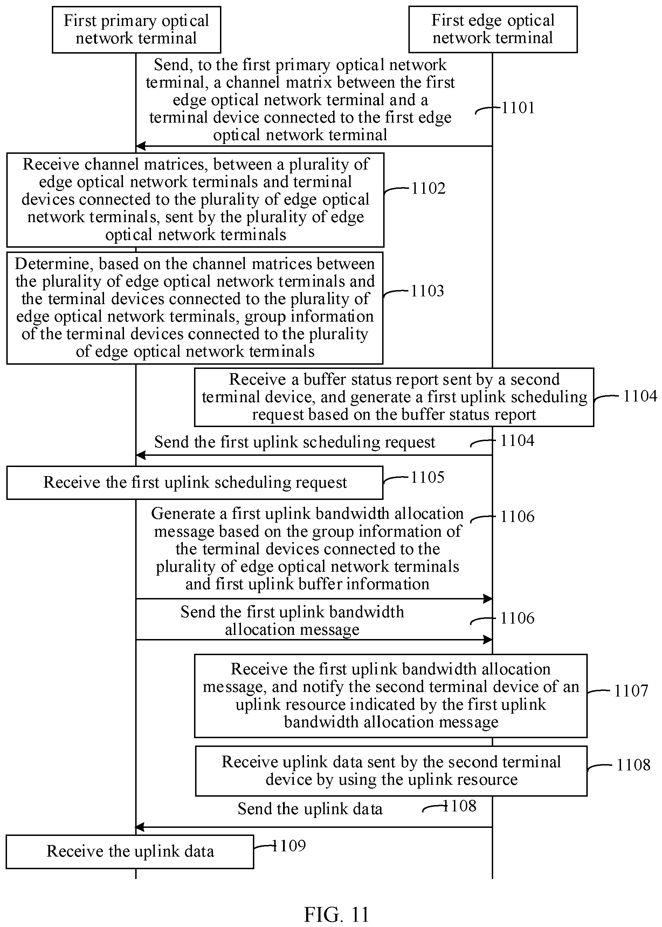

In the second possible scenario, a processing procedure is shown in FIG. 11.

Step 1101: The plurality of edge ONTs send, to the first primary ONT, channel matrices between the plurality of edge ONTs and the STAs connected to the plurality of edge ONTs.

The plurality of edge ONTs access the first primary ONT.

In this embodiment, each of the plurality of edge ONTs has a probe mode, and a channel matrix between the edge ONT and a STA connected to the edge ONT may be obtained by using the probe mode. The plurality of edge ONTs send, to the primary ONT, the channel matrices between the plurality of edge ONTs and the STAs connected to the plurality of edge ONTs. The channel matrix is a downlink channel matrix.

Step 1102: The first primary ONT receives the channel matrices, between the plurality of edge ONTs and the STAs connected to the plurality of edge ONTs, sent by the plurality of edge ONTs.

Step 1103: The first primary ONT determines, based on the channel matrices between the plurality of edge ONTs and the STAs connected to the plurality of edge ONTs, group information of the STAs connected to the plurality of edge ONTs.

In this embodiment, the first primary ONT determines a correlation or a condition number of any two channel matrices based on the channel matrices between the plurality of edge ONTs and the STAs connected to the plurality of edge ONTs.

An edge ONT 1 and an edge ONT 2 are used as an example for description. When a correlation of a channel matrix between the edge ONT 1 and a STA connected to the edge ONT 1 and a channel matrix between the edge ONT 2 and a STA connected to the edge ONT 2 is less than a second threshold, the STA connected to the edge ONT 1 and the STA connected to the edge ONT 2 may be grouped into a same group; otherwise, the STA connected to the edge ONT 1 and the STA connected to the edge ONT 2 cannot be grouped into a same group. Alternatively, when a condition number of a channel matrix between the edge ONT 1 and a STA connected to the edge ONT 1 and a channel matrix between the edge ONT 2 and a STA connected to the edge ONT 2 meets a specific condition, it indicates that coordinated MIMO transmission can be performed, and the STA connected to the edge ONT 1 and the STA connected to the edge ONT 2 may be grouped into a same group; otherwise, the STA connected to the edge ONT 1 and the STA connected to the edge ONT 2 cannot be grouped into a same group. The edge ONT 1 and the edge ONT 2 herein may be a same edge ONT, or may be different edge ONTs.

Step 1104: The first edge ONT receives a BSR sent by the second STA, and sends a first uplink scheduling request of the second STA to the first primary ONT based on the BSR.

In this embodiment, if the second STA needs to send uplink data, the second STA may generate the BSR, where the BSR includes a data amount of the to-be-transmitted uplink data. The second STA sends the BSR to the first edge ONT.

The first edge ONT receives the BSR sent by the second STA, and obtains the data amount of the uplink data of the STA from the BSR, to generate first uplink buffer information. Then, the first edge ONT sends the first uplink scheduling request to the first primary ONT.

Step 1105: The first primary ONT receives the first uplink scheduling request of the second STA sent by the first edge ONT.

Step 1106: The first primary ONT generates a first uplink bandwidth allocation message based on the group information of the STAs connected to the plurality of edge ONTs and the first uplink buffer information, and sends the first uplink bandwidth allocation message to the first edge ONT, where interference caused when devices belonging to a same group transmit data by using a same resource is less than the target threshold.

Processing of step 1106 is the same as processing of step 704. Details are not described herein again.

Step 1107: The first edge ONT receives the first uplink bandwidth allocation message sent by the first primary ONT, and notifies the second STA of an uplink resource indicated by the first uplink bandwidth allocation message.

In this embodiment, after receiving the first uplink bandwidth allocation message sent by the first primary ONT, the first edge ONT notifies the second STA of the uplink resource to be used by the second STA.

Step 1108: The first edge ONT receives the uplink data that is sent by the second STA by using the uplink resource indicated by the first uplink bandwidth allocation message, and sends the uplink data to the first primary ONT.

In this embodiment, the second STA may send the uplink data to the first edge ONT by using the uplink resource. After receiving the uplink data, the first edge ONT requests a resource from the first primary ONT. The first primary ONT allocates the resource to the first edge ONT, where the resource is used by the first edge ONT to send uplink data of a first STA to the first primary ONT. The first edge ONT sends the uplink data to the first primary ONT by using the requested resource. Herein, the first edge ONT is connected to the first primary ONT by using an optical fiber, and the resource used by the first edge ONT to send the uplink data to the first primary ONT is a time domain resource and a frequency domain resource.

Step 1109: The first primary ONT receives the uplink data sent by the first edge ONT.

In this embodiment, after receiving the uplink data sent by the first edge ONT, the first primary ONT may request a resource from an OLT, and send the uplink data to the OLT by using the requested resource.

It should be noted herein that step 1103 may alternatively be performed after step 1105. FIG. 11 shows only interaction between the first primary ONT and the first edge ONT.

In a possible implementation, the first edge ONT may further provide a sending start time point and a sending end time point to the first primary ONT, where the sending start time point is a time point at which the second STA starts sending of the uplink data corresponding to the BSR, and the sending end time point is a time point at which the second STA ends sending of the uplink data. Processing is as follows:
the first device sends, based on the sending start time point and the sending end time point, a second uplink bandwidth allocation message to the edge ONT to which the second device belongs, where a time point at which the second uplink bandwidth allocation message is transmitted to the edge ONT to which the second device belongs is not later than a time point at which the uplink data is transmitted to the edge ONT to which the second device belongs, and an uplink resource indicated by the second uplink bandwidth allocation message is used by the edge ONT to which the second device belongs to send the uplink data to the first device.

In this embodiment, the first edge ONT may obtain an air interface status, an uplink/downlink transmission status, and an uplink modulation and coding scheme (modulation and coding scheme, MCS) of the STA by using a function of an AP. The air interface status is idle or busy. The uplink/downlink transmission status indicates whether data is sent over an uplink or a downlink. The uplink MCS indicates an uplink modulation and coding scheme. The first edge ONT determines the sending start time point and a transmit rate of the uplink data of the second STA based on the air interface status, the uplink/downlink transmission status, and the uplink MCS of the second STA and the data amount; then multiplies the transmit rate by the data amount of the uplink data, to determine a duration required for sending the uplink data; and adds the duration to the sending start time point, to obtain the sending end time point. Then, the first edge ONT adds the sending start time point and the sending end time point to the first uplink scheduling request.

After receiving the first uplink scheduling request, the first primary ONT obtains, through parsing, the sending start time point and the sending end time point. The first primary ONT estimates, based on the sending start time point and the sending end time point, a time point at which the uplink data of the second STA is transmitted to the first edge ONT. Before the time point, the first primary ONT may allocate, to the first edge ONT in advance, the resource used to transmit the uplink data of the second STA, that is, generate the second uplink bandwidth allocation message. The first primary ONT sends the second uplink bandwidth allocation message to the first edge ONT. In this way, the time point at which the second uplink bandwidth allocation message is sent to the first edge ONT is not later than the time point at which the uplink data is transmitted to the first edge ONT, so that after the uplink data arrives at the first edge ONT, the uplink data can be transmitted immediately without requesting a resource from the first primary ONT. This reduces a transmission delay of the uplink data.

In a possible implementation, the first edge ONT may alternatively request a resource from the first primary ONT in advance. Processing is as follows:
the third device determines a sending start time point and a sending end time point based on the uplink data, where the sending start time point is a time point at which the STA starts sending of the uplink data, and the sending end time point is a time point at which the STA ends sending of the uplink data; the third device sends a third uplink scheduling request to the first device based on the uplink data, the sending start time point, and the sending end time point, where the third uplink scheduling request is for requesting the first device to allocate, to the third device, a resource used to transmit the uplink data to the first device; and the third device receives a second uplink bandwidth allocation message sent by the first device. The sending the uplink data to the first device includes: sending the uplink data to the first device by using an uplink resource indicated by the second uplink bandwidth allocation message.

In this embodiment, the first edge ONT determines, based on the sending start time point and the sending end time point, a time point at which the third uplink scheduling request is sent, and sends the third uplink scheduling request to the first primary ONT at the time point, where a time point at which the first primary ONT returns the second uplink bandwidth allocation message is close to a time point at which the uplink data of the second STA is sent to the first edge ONT. The first edge ONT sends the uplink data to the first primary ONT by using the uplink resource indicated by the second uplink bandwidth allocation message. In this way, after receiving the uplink data sent by the second STA, the first edge ONT may immediately transmit the uplink data to the first primary ONT without waiting. This can reduce a transmission delay of the uplink data.

In a possible implementation, after step 1106, when the first primary ONT sends the first uplink bandwidth allocation message to the first edge ONT, the first primary ONT may send a second uplink scheduling request to an OLT. Processing is as follows:
the first device determines, based on time points at which the first uplink buffer information and the first uplink bandwidth allocation message are provided, a time point at which the second uplink scheduling request is sent, where the second uplink scheduling request is for requesting, from the first device, a resource used to send the uplink data to an OLT, and the time point is earlier than a time point at which the uplink data is transmitted to the first device; the first device sends the second uplink scheduling request to the OLT at the time point; the first device receives a third uplink bandwidth allocation message sent by the OLT; and the first device sends the uplink data to the OLT by using an uplink resource indicated by the third uplink bandwidth allocation message.

In this embodiment, the first primary ONT may generate the second uplink scheduling request based on the first uplink buffer information, where the second uplink scheduling request is for requesting, from the OLT, the uplink resource used to send the uplink data indicated by the first uplink buffer information. The first primary ONT may estimate, based on the sending time points in the first uplink buffer information and the first uplink bandwidth allocation message, a time point at which the uplink data indicated by the first uplink buffer information is sent to the first primary ONT. This may be: determining, based on a mechanism in which the second uplink bandwidth allocation message used by the OLT to schedule the uplink resource for the first primary ONT is expected to be received before the time point, the time point at which the second uplink scheduling request is sent to the OLT; and sending the second uplink scheduling request to the OLT at the time point. For example, the time point is a sending time point at which the first primary ONT sends the first uplink bandwidth allocation message to the second STA.

After receiving the second uplink scheduling request sent by the first primary ONT, the OLT may schedule the resource for the first primary ONT, and send the third uplink bandwidth allocation message to the first primary ONT. The first primary ONT sends the uplink data to the OLT by using the uplink resource indicated by the third uplink bandwidth allocation message. In this way, after receiving the uplink data of the second STA, the first primary ONT immediately sends the uplink data to the OLT without waiting. This can reduce a transmission delay of the uplink data.

In a possible implementation, in step 1106, a service priority of the uplink data may be further considered. Processing in step 1106 may be as follows:
the first primary ONT generates the first uplink bandwidth allocation message based on the group information of the STAs connected to the plurality of edge ONTs, the service priority of the uplink data, and the first uplink buffer information.

In this embodiment, the first primary ONT generates the first uplink bandwidth allocation message based on the service priority of the uplink data, the first uplink buffer information, and the group information of the STAs connected to the plurality of edge ONTs. Optionally, a same time domain resource and a same frequency domain resource, or a same time domain resource and a same space domain resource are allocated to uplink data that has a high service priority and that is of STAs that belong to a same group. Then, the first primary ONT generates the first uplink bandwidth allocation message, where the first uplink bandwidth allocation message includes an identifier of the uplink resource scheduled for the second STA. In this way, because the service priority is considered during resource scheduling, a resource may be preferentially scheduled for data with a high service priority, and the data with the high service priority may be preferentially transmitted.

In this way, because interference between the STAs is considered when the primary ONT schedules the uplink resources for the STAs connected to the edge ONTs, interference caused when the STAs transmit data can be reduced. In addition, because the edge ONTs belong to a home, it may also be considered that interference inside the home is reduced.

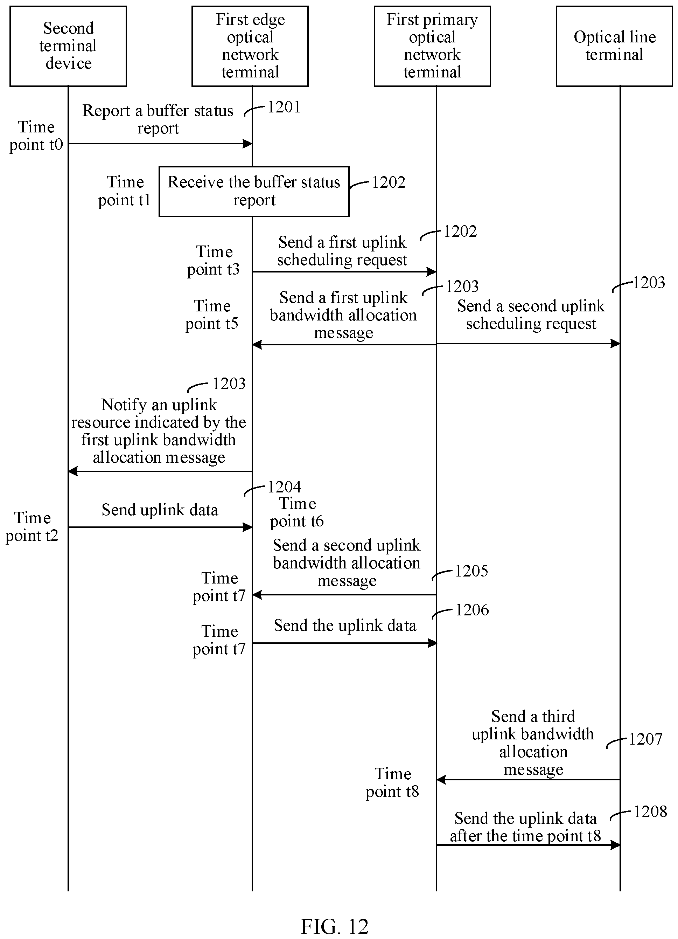

As shown in FIG. 12, an example of the procedure shown in FIG. 11 is provided.

Step 1201: A second STA reports a BSR to a first edge ONT at a time point t0, where the BSR includes a data amount of to-be-sent uplink data.

Step 1202: At a time point t1, the first edge ONT receives the BSR, obtains, through parsing, the data amount of the to-be-sent uplink data, and generates first uplink buffer information. A sending start time point (namely, a time point t2) and a sending end time point are determined based on an air interface status, an uplink/downlink transmission status, an uplink MCS, and the data amount of the uplink data. At a time point t3, the first edge ONT sends a first uplink scheduling request to a first primary ONT, where the first uplink scheduling request includes the first uplink buffer information, the sending start time point, and the sending end time point.

Step 1203: The first primary ONT receives the first uplink scheduling request, and sends a first uplink bandwidth allocation message to the first edge ONT at a time point t4 based on group information of STAs connected to a plurality of edge ONTs connected to the first primary ONT. The first primary ONT sends a second uplink scheduling request to an OLT based on the sending start time point and the sending end time point in the first uplink scheduling request. The first edge ONT receives the first uplink bandwidth allocation message at a time point t5, and notifies the second STA of an uplink resource indicated by the first uplink bandwidth allocation message.

Step 1204: The first edge ONT receives, at a time point t6, the uplink data sent by the second STA.

Step 1205: The first edge ONT receives, at a time point t7, a second uplink bandwidth allocation message sent by the first primary ONT. t6 is less than or equal to t7.

Step 1206: The first edge ONT sends the uplink data to the primary ONT at a time point t7.

Step 1207: The OLT sends a third uplink bandwidth allocation message to the primary ONT based on the second uplink scheduling request.

Step 1208: The first primary ONT receives the third uplink bandwidth allocation message at a time point t8, and sends the uplink data to the OLT after the time point t8 by using an uplink resource indicated by the third uplink bandwidth allocation message.

In this way, the primary ONT schedules resources for the STAs based on the group information of the STAs, so that interference inside a home can be reduced.

It should be noted herein that, in FIG. 12, after receiving the uplink data, the first primary ONT and the OLT each return an acknowledgment (acknowledgement, ACK) message to a corresponding sender, which is not shown in FIG. 12.

In a third possible scenario, a first device is an OLT in the FTTR, a second device is a third STA in the FTTR, a third device is a first edge ONT, and the third STA accesses the first edge ONT. A plurality of devices connected to the first device each are a STA connected to an edge ONT. For example, an OLT is connected to primary ONTs of four homes, which are respectively a primary ONT of a home 1, a primary ONT of a home 2, a primary ONT of a home 3, and a primary ONT of a home 4. A primary ONT of each home is connected to an edge ONT. Each edge ONT is connected to a STA, to provide a network transmission service for the STA.

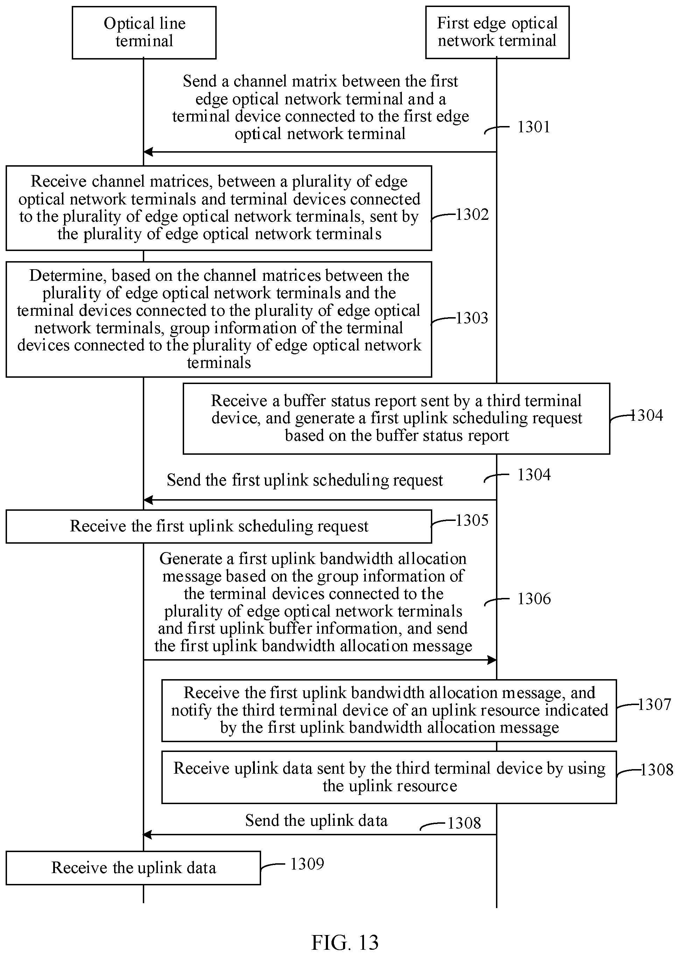

In the third possible scenario, a processing procedure is shown in FIG. 13.

Step 1301: The plurality of edge ONTs send, to the OLT, channel matrices between the plurality of edge ONTs and the STAs connected to the plurality of edge ONTs.

In this embodiment, each of the plurality of edge ONTs has a probe mode, and a channel matrix between the edge ONT and a STA connected to the edge ONT may be obtained by using the probe mode. The plurality of edge ONTs send, to the primary ONTs, the channel matrices between the plurality of edge ONTs and the STAs connected to the plurality of edge ONTs. The channel matrix is a downlink channel matrix. The plurality of edge ONTs send the obtained channel matrices to the primary ONTs to which the plurality of edge ONTs belong.

Step 1302: The OLT receives the channel matrices, between the plurality of edge ONTs and the STAs connected to the plurality of edge ONTs, sent by the plurality of edge ONTs.

Step 1303: The OLT determines, based on the channel matrices between the plurality of edge ONTs and the STAs connected to the plurality of edge ONTs, group information of the STAs connected to the plurality of edge ONTs.

In this embodiment, this process is the same as processing of the primary ONT in step 1103. Details are not described herein again.

Step 1304: The first edge ONT receives a BSR sent by the third STA, and sends a first uplink scheduling request of the third STA to the OLT based on the BSR.

In this embodiment, if a second STA needs to send uplink data, the second STA may generate the BSR, where the BSR includes a data amount of the to-be-transmitted uplink data. The third STA sends the BSR to the first edge ONT.

The first edge ONT receives the BSR sent by the third STA, and obtains the data amount of the uplink data of the STA from the BSR, to generate first uplink buffer information. Then, the first edge ONT sends the first uplink scheduling request of the third STA to a primary ONT to which the first edge ONT belongs. After receiving the first uplink scheduling request, the primary ONT sends the first uplink scheduling request to the OLT.

Step 1305: The OLT receives a first uplink scheduling request of the third STA sent by the primary ONT to which the first edge ONT belongs.

Step 1306: The OLT generates a first uplink bandwidth allocation message based on the group information of the STAs connected to the plurality of edge ONTs and the first uplink buffer information, and sends the first uplink bandwidth allocation message to the first edge ONT, where interference caused when devices belonging to a same group transmit data is less than a target threshold.

Processing of steps 1305 and 1306 is similar to processing in FIG. 11, and a difference is that steps 1305 and 1306 are performed by the OLT, and processing in FIG. 11 is performed by the primary ONT. Details are not described herein again.

Step 1307: The first edge ONT receives the first uplink bandwidth allocation message sent by the OLT, and notifies the third STA of an uplink resource indicated by the first uplink bandwidth allocation message.

In this embodiment, after receiving the first uplink bandwidth allocation message sent by the OLT, the first edge ONT notifies the third STA of the uplink resource to be used by the third STA.

Step 1308: The first edge ONT receives the uplink data that is sent by the third STA by using the uplink resource indicated by the first uplink bandwidth allocation message, and sends the uplink data to the OLT.

Step 1309: The OLT receives the uplink data sent by the first edge ONT.

For step 1308 and step 1309, refer to step 909 and step 910 in FIG. 9.

It should be noted herein that step 1303 may alternatively be performed after step 1305.

In a possible implementation, in step 1306, a service priority of the uplink data may be further considered. Processing in step 1306 may be as follows:
the OLT generates the first uplink bandwidth allocation message based on the group information of the plurality of devices, the service priority of the uplink data, and the first uplink buffer information.

In the third possible scenario, the first edge ONT may alternatively request an uplink resource in advance from the primary ONT accessed by the first edge ONT, where the resource is used by the first edge ONT to send the uplink data of the third STA to the primary ONT. Processing is the same as that in the second possible scenario. Details are not described herein again.

In FIG. 13, an example in which the third device is an edge ONT is used for description. The third device may alternatively be a primary ONT. A processing procedure is similar. Details are not described herein again.

In this way, because interference between the STAs is considered when the OLT schedules the uplink resources for the STAs, interference caused when the STAs transmit data can be reduced. In addition, because an edge ONT belongs to a home, it may also be considered that interference inside the home is reduced.

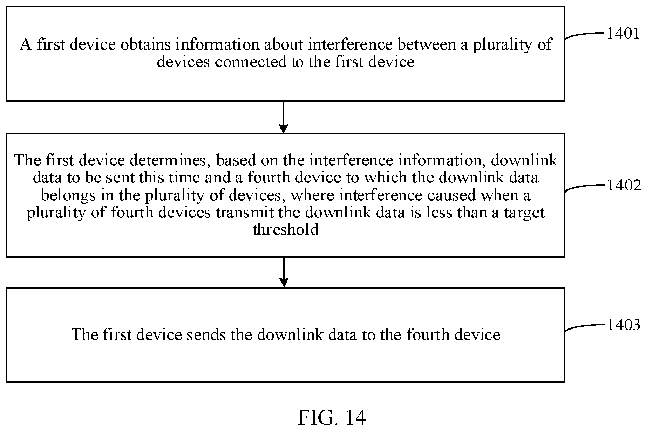

As shown in FIG. 14, the following describes an interaction procedure between the first device and a fourth device in a downlink scheduling process in the transmission scheduling method.

Step 1401: A first device obtains information about interference between a plurality of devices connected to the first device.

In this embodiment, when the first device has downlink data to be sent, the first device may obtain the information that is closest to a current time point and that is about the interference between the plurality of devices connected to the first device.

Step 1402: The first device determines, based on the interference information, downlink data to be sent this time and a fourth device to which the downlink data belongs in the plurality of devices, where interference caused when a plurality of fourth devices transmit the downlink data is less than a target threshold.

In this embodiment, the first device may determine, based on the interference information, downlink data without interference as the downlink data to be sent this time, and determine the fourth device to which the downlink data belongs. The fourth device may be one device, or may be a plurality of devices.

Optionally, the devices may be first grouped, and the downlink data to be sent this time is determined based on group information. Processing is as follows:
the first device determines the group information of the plurality of devices based on the interference information, where interference caused when devices belonging to a same group transmit data by using a same resource is less than the target threshold; and the first device determines, based on the group information, the downlink data to be sent this time and the fourth device to which the downlink data belongs in the plurality of devices.

In this embodiment, the first device groups devices whose interference is less than the target threshold when the devices transmit data by using a same resource into one group, and does not group devices whose interference is not less than the target threshold when the devices transmit by using a same resource into one group, to obtain the group information of the plurality of devices. Then, the first device determines, based on the group information, the downlink data that can be simultaneously sent this time, and then determines the fourth device to which the downlink data belongs.

Step 1403: The first device sends the downlink data to the fourth device.

In this embodiment, the first device may send the downlink data to the fourth device. The fourth device receives the downlink data sent by the first device.

In this way, the first device is connected to the plurality of devices, and may schedule downlink resources for the devices connected to the first device. In addition, because the interference between the devices is considered when the first device sends the downlink data, interference during data transmission can be reduced.

The following describes application of the downlink transmission scheduling method to FTTR.

In a first possible scenario, a first device is an OLT in the FTTR, and a fourth device is a primary ONT in the FTTR. A plurality of devices connected to the first device each are a primary ONT, but the plurality of devices belong to different homes.

In the first possible scenario, processing in step 1501 may be: The OLT receives information, about interference between edge ONTs connected to the plurality of primary ONTs, sent by the plurality of primary ONTs, where the interference information includes one or more of an RSSI, a channel occupancy ratio, or a channel occupancy spacing.

Herein, for a manner in which the primary ONTs obtain the interference information, refer to a procedure in FIG. 9. In addition, for a manner in which the OLT determines group information of the plurality of primary ONTs based on the interference information, refer to the procedure in FIG. 9. Details are not described herein again.

In this way, in the first possible scenario, the group information of the primary ONTs is determined based on the interference between the edge ONTs connected to the primary ONTs. Downlink data is transmitted to an edge ONT. When the edge ONT transmits the data to a STA, the edge ONT is not interfered with by an edge ONT connected to another primary ONT. In this way, downlink data transmission interference between the primary ONTs can be reduced.

In a second possible scenario, a first device is a primary ONT in the FTTR, and a fourth device is a STA in the FTTR. A plurality of devices connected to the first device each are a STA connected to an edge ONT, but the plurality of devices belong to one home.

In the second possible scenario, processing in step 1501 may be: The primary ONT receives channel matrices, between the plurality of edge ONTs and the terminal devices connected to the plurality of edge ONTs, sent by the plurality of edge ONTs. After obtaining the channel matrices, the primary ONT groups, based on the channel matrices, the STAs connected to the plurality of edge ONTs, to obtain group information of the STAs connected to the plurality of edge ONTs.

Herein, for a manner in which the edge ONTs obtain the channel matrices, refer to a procedure in FIG. 11. In addition, for a manner in which the primary ONT determines, based on the channel matrices, the group information of the STAs connected to the plurality of edge ONTs, refer to the procedure in FIG. 11. Details are not described herein again.

The primary ONT determines a first downlink bandwidth allocation message based on the group information of the STAs connected to the plurality of edge ONTs, where the first downlink bandwidth allocation message indicates a resource occupied when downlink data is transmitted to the fourth device from an edge ONT to which the fourth device belongs. The primary ONT sends the first downlink bandwidth allocation message to the edge ONT to which the fourth device belongs.

In this embodiment, the primary ONT may determine, based on the group information of the STAs connected to the plurality of edge ONTs, STAs that can transmit the downlink data by using a same resource, and then determine the first downlink bandwidth allocation message based on the STAs that transmit the downlink data by using the same resource. The primary ONT sends the first downlink bandwidth allocation message to the edge ONT to which the fourth device belongs. Subsequently, the edge ONT may send the downlink data to the fourth device by using a downlink resource indicated by the first downlink bandwidth allocation message. The same resource herein is a same resource used when the edge ONTs transmit the data to the STAs.

In this way, in the second possible scenario, because the primary ONT may send, based on the group information of the STAs connected to the edge ONTs, the downlink data to the STAs connected to the edge ONTs, interference caused when the edge ONTs transmit the downlink data to the STAs can be reduced.

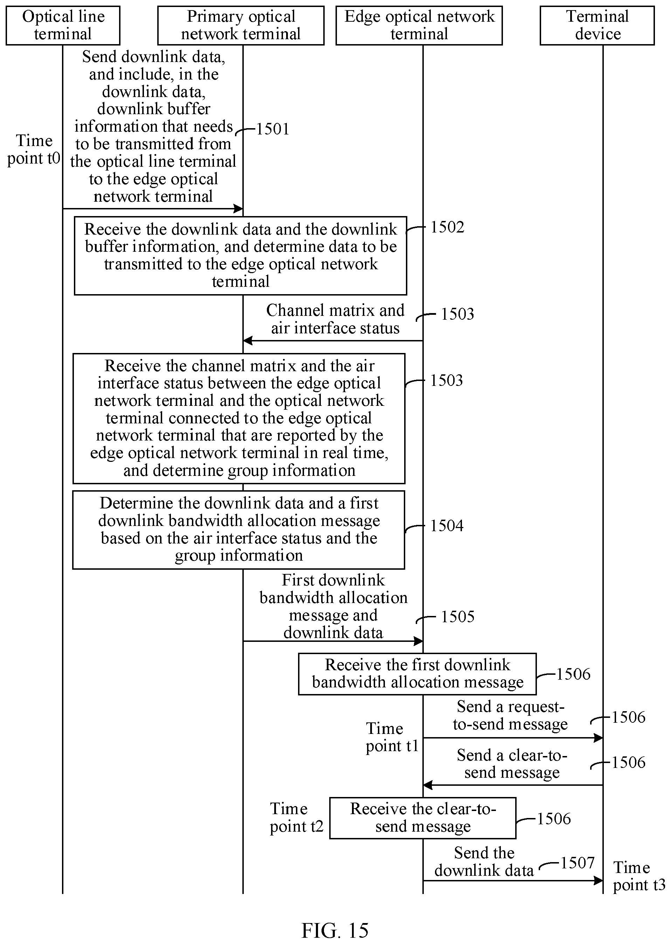

In a third possible scenario, the first possible scenario is combined with the second possible scenario. As shown in FIG. 15, a processing procedure is as follows:
Step 1501: An OLT sends downlink data to a primary ONT at a time point t0 based on group information of a plurality of primary ONTs, and includes, in the downlink data, downlink buffer information that needs to be transmitted from the OLT to an edge ONT, where the downlink buffer information indicates a STA to which the downlink data belongs.

Step 1502: The primary ONT receives the downlink data and the downlink buffer information, and determines data to be transmitted to the edge ONT.

Step 1503: The primary ONT receives a channel matrix and an air interface status that are between the edge ONT and the STA connected to the edge ONT and that are reported by the edge ONT in real time, and determines the group information based on the channel matrix.

Step 1504: The primary ONT determines, based on the air interface status and the group information, the downlink data to be sent by the edge ONT and a first downlink bandwidth allocation message, where the first downlink bandwidth allocation message includes a downlink resource used to transmit the downlink data from the edge ONT to each STA, and an identifier of the STA to which the downlink data belongs.

Processing of step 1504 is described below.

Step 1505: The primary ONT sends the first downlink bandwidth allocation message and the downlink data to the edge ONT.

Step 1506: The edge ONT receives the first downlink bandwidth allocation message, sends, at a time point t1, a request-to-send (request-to-send, RTS) message to a STA indicated by an identifier of each STA, and receives, at a time point t2, a clear-to-send (clear-to-send, CTS) message sent by the STA. This process is described below.

Step 1507: The edge ONT sends the downlink data to the STA by using the downlink resource indicated by the downlink bandwidth allocation message, where a time point at which the downlink data arrives at the STA is t3.

It should be noted herein that, in the procedure shown in FIG. 15, only one edge ONT and one STA are described.

In this way, because the OLT uses the group information of the primary ONTs, and the primary ONT may send, based on the group information of the STAs connected to the edge ONTs, the downlink data to the STAs connected to the edge ONTs, interference from another home during transmission from the edge ONT to the STA can be reduced, and interference from another STA in the home during transmission from the edge ONT to the STA can also be reduced.

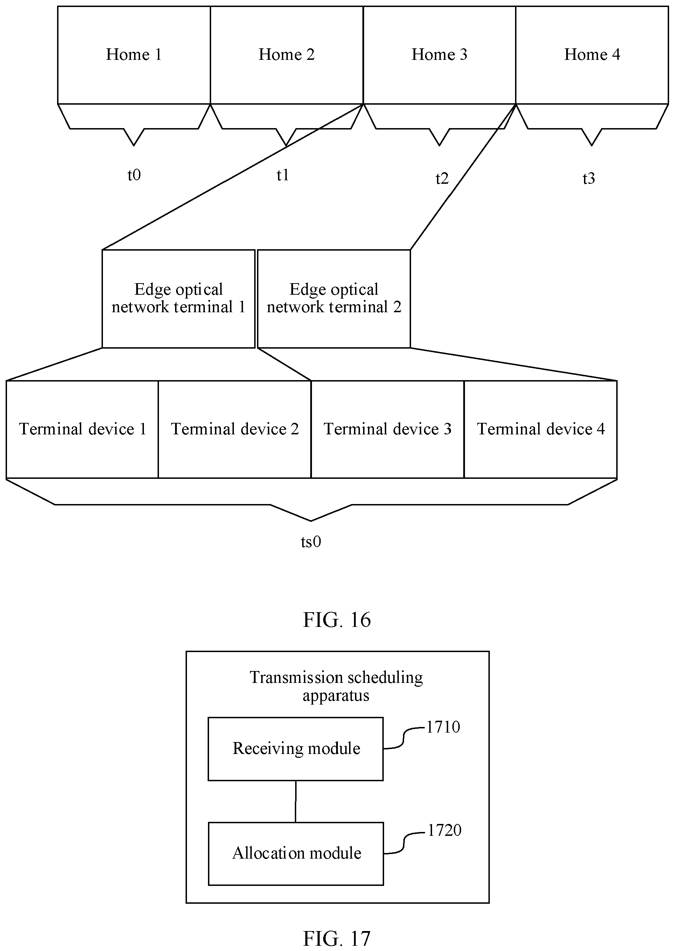

In the third possible scenario, as shown in FIG. 16, grouping of primary ONTs and grouping of STAs connected to edge ONTs are described. It is assumed that an OLT is connected to primary ONTs of a home 1 to a home 4, the primary ONT of the home 1 to the primary ONT of the home 4 form four groups, and the groups respectively include the primary ONT of the home 1, the primary ONT of the home 2, the primary ONT of the home 3, and the primary ONT of the home 4, and respectively occupy slots t0, t1, t2, and t3. The primary ONT of the home 3 is connected to an edge ONT 1, an edge ONT 2, and an edge ONT 3. A STA 1 and a STA 2 in the edge ONT 1 and a STA 3 and a STA 4 in the edge ONT 2 may be separately transmitted in a same slot ts0. Time-domain-based grouping is described herein only in terms of time domain. It is assumed herein that a same frequency domain resource is used.

In a fourth possible scenario, a first device is an OLT in the FTTR, a fourth device is a STA in the FTTR, a plurality of devices connected to the first device each are a STA connected to an edge ONT, and the first device is connected to an edge ONT through a primary ONT.

In the fourth possible scenario, processing in step 1401 may be: The OLT receives channel matrices, between the plurality of edge ONTs and the terminal devices connected to the plurality of edge ONTs, sent by the plurality of edge ONTs. After obtaining the channel matrices, the OLT groups, based on the channel matrices, the STAs connected to the plurality of edge ONTs, to obtain group information of the STAs connected to the plurality of edge ONTs.

Herein, for a manner in which the edge ONTs obtain the channel matrices, refer to a procedure in FIG. 11. In addition, for a manner in which the primary ONT determines, based on the channel matrices, the group information of the STAs connected to the plurality of edge ONTs, refer to the procedure in FIG. 11. Details are not described herein again.

The OLT determines a second downlink bandwidth allocation message based on the group information of the STAs connected to the plurality of edge ONTs, where the second downlink bandwidth allocation message indicates a resource occupied when downlink data is transmitted to the fourth device from an edge ONT to which the fourth device belongs. The OLT sends the second downlink bandwidth allocation message to the edge ONT to which the fourth device belongs.

In this embodiment, the OLT may determine, based on the group information of the STAs connected to the plurality of edge ONTs, STAs that can transmit the data by using a same resource, and then determine the second downlink bandwidth allocation message based on the STAs that transmit the data by using the same resource. The OLT sends the second downlink bandwidth allocation message to the edge ONT to which the fourth device belongs. Subsequently, the edge ONT may send the downlink data to the fourth device by using a downlink resource indicated by the second downlink bandwidth allocation message.

In this way, in the fourth possible scenario, because the OLT may schedule downlink resources for the edge ONTs by using the group information of the STAs connected to the edge ONTs, to send the downlink data to the STAs, downlink data transmission interference between the STAs can be reduced.

In the foregoing four scenarios, when sending the downlink data, the OLT and the primary ONT include, in the bandwidth allocation message, the identifier of the STA to which the downlink data belongs. After receiving the downlink data sent by the primary ONT, the edge ONT determines the STA to which the downlink data belongs, and sends the RTS message to the STA. The STA sends the CTS message to the edge ONT, to preempt an air interface. In this way, the edge ONT can immediately send the downlink data to the STA provided that the edge ONT receives the downlink data of the STA. This ensures continuous downlink sending, and reduces a transmission delay of the downlink data.

In a possible implementation, in the second possible scenario to the fourth possible scenario, to enable the downlink data to quickly arrive at the device to which the downlink data belongs, processing in step 1402 is as follows:
the first device determines, based on the group information, and the air interface status between the STA to which the downlink data belongs and the edge ONT, the downlink data to be sent this time and the fourth device to which the downlink data belongs in the plurality of edge ONTs.

For an edge ONT, an air interface status between the edge ONT and a STA to which the edge ONT is connected is an idle state or a busy state.

In this embodiment, the first device may preferentially transmit downlink data of a STA whose air interface status between the edge ONT and the STA is an idle state, and determine, based on the group information of the STAs connected to the plurality of edge ONTs, that a same resource may be used to transmit downlink data of STAs in a same group. In this manner, the first device determines the downlink data to be sent this time and the device to which the downlink data belongs. In this way, the downlink data of the STA in the air interface status is preferentially sent, so that continuous transmission of the downlink data can be ensured.

In a possible implementation, in the first possible scenario to the fourth possible scenario, to enable downlink data with a high service priority to preferentially arrive at a device to which the downlink data belongs, processing in step 1402 is as follows:
the first device determines, based on the group information and the service priority of the downlink data to be transmitted by the first device, the downlink data to be sent this time and the fourth device to which the downlink data belongs in the plurality of edge ONTs.

In this embodiment, the first device may view a service priority of downlink data of each STA, preferentially transmit downlink data with a high service priority, and determine, based on the group information of the STAs connected to the plurality of edge ONTs, that a same resource may be used to transmit downlink data of STAs in a same group. In this manner, the first device determines the downlink data to be sent this time and the device to which the downlink data belongs. In this way, the downlink data with the high service priority is preferentially sent, so that the data with the high service priority can be preferentially transmitted to the STA.

In a possible implementation, in the second possible scenario to the fourth possible scenario, to enable downlink data with a high service priority to preferentially arrive at a device to which the downlink data belongs, and enable the downlink data to quickly arrive at the device to which the downlink data belongs, processing in step 1402 is as follows:
the first device determines, based on the group information, the air interface status between the STA to which the downlink data belongs and the edge ONT, and the service priority of the downlink data to be transmitted by the first device, the downlink data to be sent this time and the fourth device to which the downlink data belongs in the plurality of edge ONTs.

In this way, downlink data of a STA whose air interface status is an idle state is preferentially sent, so that continuous transmission of the downlink data can be ensured. In addition, the downlink data with the high service priority is preferentially sent, so that the data with the high service priority can be preferentially transmitted to the STA.

In descriptions of downlink transmission scheduling, because the OLT uses the group information of the primary ONTs, and the primary ONT may send, based on the group information of the STAs connected to the edge ONTs, the downlink data to the STAs connected to the edge ONTs, interference from another home during transmission from the edge ONT to the STA can be reduced, and interference from another STA in the home during transmission from the edge ONT to the STA can also be reduced.

It should be noted that, in this embodiment of this application, an example in which an edge ONT has a function of an AP is used for description. When the edge ONT does not have the function of the AP, the edge ONT is connected to the AP, and the AP detects interference information and transmits the interference information to the edge ONT. The edge ONT forwards the interference information to the primary ONT.

It should be further noted that, in this embodiment of this application, "first", "second", "third", and "fourth" are used to distinguish between devices, scheduling requests, or bandwidth allocation messages.

FIG. 17 is a diagram of a structure of a transmission scheduling apparatus according to an embodiment of this application. The apparatus may be implemented as a part of the apparatus or the entire apparatus by using software, hardware, or a combination thereof. The apparatus provided in this embodiment of this application may implement the procedures shown in FIG. 5 and FIG. 7 in embodiments of this application. The apparatus includes a receiving module 1710 and an allocation module 1720.

The receiving module 1710 is configured to receive a first uplink scheduling request of a second device, where the first uplink scheduling request includes first uplink buffer information, and the first uplink buffer information is determined based on uplink data to be sent by the second device. The receiving module 1710 may be specifically configured to: implement receiving functions in step 501 and step 703, and perform implicit steps included in step 501 and step 703.

The allocation module 1720 is configured to generate a first uplink bandwidth allocation message based on information about interference between a plurality of devices connected to the first device and the first uplink buffer information, where the first uplink bandwidth allocation message indicates an uplink resource allocated to the second device, and interference caused to the second device when the second device sends the uplink data by using the uplink resource is less than a target threshold. The allocation module 1720 may be specifically configured to: implement allocation functions in step 502 and step 704, and perform implicit steps included in step 502 and step 704.

The receiving module 1710 is further configured to receive the data sent by the second device by using the uplink resource. The receiving module 1710 may be specifically configured to: implement receiving functions in step 503 and step 707, and perform implicit steps included in step 503 and step 707.

In a possible implementation, the allocation module 1720 is configured to:
determine group information of the plurality of devices based on the information about the interference between the plurality of devices connected to the first device; and
generate the first uplink bandwidth allocation message based on the group information of the plurality of devices and the first uplink buffer information, where interference caused when devices belonging to a same group transmit data by using a same resource is less than the target threshold.

In a possible implementation, the first device is an OLT, the second device is a STA, the plurality of devices are a plurality of primary ONTs, the plurality of primary ONTs access the OLT, and the second device accesses a primary ONT through an edge ONT. The receiving module 1710 is further configured to receive information, about interference between edge ONTs connected to the plurality of primary ONTs, sent by the plurality of primary ONTs, where the information about the interference between the connected edge ONTs includes one or more of an RSSI, a channel occupancy ratio, or a channel occupancy spacing.

The allocation module 1720 is further configured to determine strength of interference between the plurality of primary ONTs based on the information about the interference between the edge ONTs connected to the plurality of primary ONTs.

The allocation module 1720 is configured to:
determine group information of the plurality of primary ONTs based on the strength of the interference between the plurality of primary ONTs connected to the first device.

In a possible implementation, the first device is a primary ONT, the second device is a STA, the plurality of devices are STAs connected to a plurality of edge ONTs, and the plurality of edge ONTs access the primary ONT. The receiving module 1710 is further configured to receive channel matrices, between the plurality of edge ONTs and the STAs connected to the plurality of edge ONTs, sent by the plurality of edge ONTs.

The allocation module 1720 is configured to determine, based on the channel matrices between the plurality of edge ONTs and the STAs connected to the plurality of edge ONTs, the group information of the STAs connected to the plurality of edge ONTs.

In a possible implementation, the first uplink scheduling request further includes a sending start time point and a sending end time point that are determined by an edge ONT to which the second device belongs, the sending start time point is a time point at which the STA starts sending of the uplink data, and the sending end time point is a time point at which the STA ends sending of the uplink data. The allocation module 1720 is further configured to send, based on the sending start time point and the sending end time point, a second uplink bandwidth allocation message to the edge ONT to which the second device belongs, where a time point at which the second uplink bandwidth allocation message is transmitted to the edge ONT to which the second device belongs is not later than a time point at which the uplink data is transmitted to the edge ONT to which the second device belongs, and an uplink resource indicated by the second uplink bandwidth allocation message is used by the edge ONT to which the second device belongs to send the uplink data to the first device.

In a possible implementation, the allocation module 1720 is further configured to: determine, based on time points at which the first uplink buffer information and the first uplink bandwidth allocation message are provided, a time point at which a second uplink scheduling request is sent, where the second uplink scheduling request is for requesting, from the first device, a resource used to send the uplink data to an OLT, and the time point is earlier than a time point at which the uplink data is transmitted to the first device; and
send the second uplink scheduling request to the OLT at the time point.

The receiving module 1710 is further configured to receive a third uplink bandwidth allocation message sent by the OLT.

The allocation module 1720 is further configured to send the uplink data to the OLT by using an uplink resource indicated by the third uplink bandwidth allocation message.

In a possible implementation, the first device is an OLT, the second device is a STA, the plurality of devices are STAs connected to a plurality of edge ONTs, and the plurality of edge ONTs access the OLT through primary ONTs. The receiving module is further configured to receive channel matrices, between the plurality of edge ONTs and the STAs connected to the plurality of edge ONTs, sent by the plurality of edge ONTs.

The allocation module 1720 is configured to:
determine, based on the channel matrices between the plurality of edge ONTs connected to the first device and the STAs connected to the plurality of edge ONTs, the group information of the STAs connected to the plurality of edge ONTs.

In a possible implementation, the allocation module 1720 is configured to:
generate the first uplink bandwidth allocation message based on the information about the interference between the plurality of devices connected to the first device, the first uplink buffer information, and a service priority of the uplink data.

In a possible implementation, the uplink resource indicated by the first uplink bandwidth allocation message is a space domain resource and a time domain resource, or a frequency domain resource and a time domain resource.

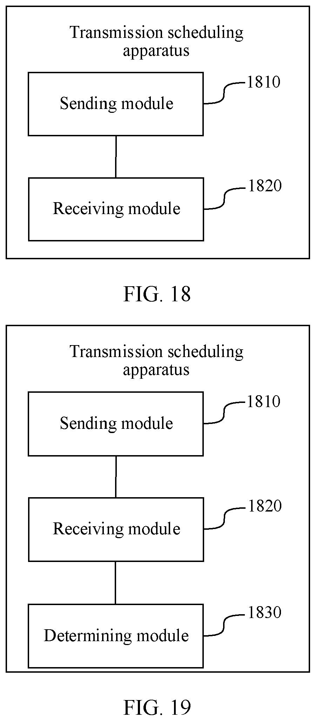

FIG. 18 is a diagram of a structure of a transmission scheduling apparatus according to an embodiment of this application. The apparatus may be implemented as a part of the apparatus or the entire apparatus by using software, hardware, or a combination thereof. The apparatus provided in this embodiment of this application may implement the procedure shown in FIG. 7 in embodiments of this application. The apparatus includes a sending module 1810 and a receiving module 1820.

The sending module 1810 is configured to:
send, to the first device, interference information obtained by the third device; and
send a first uplink scheduling request of a second device to the first device based on uplink data to be sent by the second device, where the first uplink scheduling request includes first uplink buffer information, and the first uplink buffer information is determined based on the uplink data. The sending module 1810 may be specifically configured to: implement sending functions in step 601, step 602, step 701, and step 702, and perform implicit steps included in step 601, step 602, step 701, and step 702.

The receiving module 1820 is configured to:
receive a first uplink bandwidth allocation message sent by the first device based on the interference information, and notify, by the third device, the second device of an uplink resource indicated by the first uplink bandwidth allocation message; and
receive the uplink data sent by the second device by using the uplink resource. The receiving module 1820 may be specifically configured to: implement receiving functions in step 603, step 604, step 705, and step 706, and perform implicit steps included in step 705 and step 706.

The sending module 1810 is further configured to send the uplink data to the first device. The sending module 1810 may be specifically configured to: implement sending functions in step 604 and step 706, and perform an implicit step included in step 706.

In a possible implementation, the first device is a primary ONT or an OLT, the second device is a STA, the third device is an edge ONT accessed by the second device, and the interference information is a channel matrix between the third device and the STA connected to the third device.

Alternatively, the first device is an OLT, the second device is a STA, the third device is an edge ONT accessed by the second device, and the interference information is information about interference between the third device and a plurality of edge ONTs accessing the OLT.

Alternatively, the first device is an OLT, the second device is a STA, the third device is a primary ONT accessed by the second device, and the interference information is information about interference between the third device and a plurality of primary ONTs accessing the OLT.

In a possible implementation, the first device is a primary ONT, the second device is a STA, and the third device is an edge ONT accessed by the second device.

As shown in FIG. 19, the apparatus further includes:
a determining module 1830, configured to determine a sending start time point and a sending end time point based on the uplink data, where the sending start time point is a time point at which the STA starts sending of the uplink data, and the sending end time point is a time point at which the STA ends sending of the uplink data.

The sending module 1810 is further configured to send a third uplink scheduling request to the first device based on the uplink data, the sending start time point, and the sending end time point, where the third uplink scheduling request is for requesting the first device to allocate, to the third device, a resource used to transmit the uplink data to the first device.

The receiving module 1820 is further configured to receive a second uplink bandwidth allocation message sent by the first device.

The sending module 1810 is further configured to send the uplink data to the first device by using an uplink resource indicated by the second uplink bandwidth allocation message.

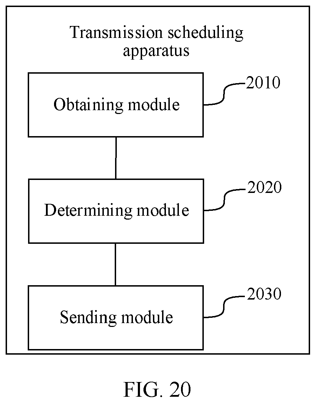

FIG. 20 is a diagram of a structure of a transmission scheduling apparatus according to an embodiment of this application. The apparatus may be implemented as a part of the apparatus or the entire apparatus by using software, hardware, or a combination thereof. The apparatus provided in this embodiment of this application may implement the procedure shown in FIG. 14 in embodiments of this application. The apparatus includes an obtaining module 2010, a determining module 2020, and a sending module 2030.

The obtaining module 2010 is configured to obtain information about interference between a plurality of devices connected to the first device. The obtaining module 2010 may be specifically configured to: implement an obtaining function in step 1401, and perform an implicit step included in step 1401.

The determining module 2020 is configured to determine, based on the interference information, downlink data to be sent this time and a fourth device to which the downlink data belongs in the plurality of devices, where interference caused when a plurality of fourth devices transmit the downlink data is less than a target threshold. The determining module 2020 may be specifically configured to: implement a determining function in step 1402, and perform an implicit step included in step 1402.

The sending module 2030 is configured to send the downlink data to the fourth device. The sending module 2030 may be specifically configured to: implement a sending function in step 1403, and perform an implicit step included in step 1403.

In a possible implementation, the determining module 2020 is configured to:
determine group information of the plurality of devices based on the interference information, where interference caused when devices belonging to a same group transmit data by using a same resource is less than the target threshold; and
determine, based on the group information, the downlink data to be sent this time and the fourth device to which the downlink data belongs in the plurality of devices.

In a possible implementation, the first device is an OLT, the fourth device is a STA, the plurality of devices are a plurality of primary ONTs, the plurality of primary ONTs access the OLT, and the fourth device accesses a primary ONT through an edge ONT. The obtaining module 2010 is further configured to receive information, about interference between edge ONTs connected to the plurality of primary ONTs, sent by the plurality of primary ONTs, where the information about the interference between the connected edge ONTs includes one or more of a received signal strength indication RSSI, a channel occupancy ratio, or a channel occupancy spacing.

The determining module 2020 is further configured to determine strength of interference between the plurality of primary ONTs based on the information about the interference between the edge ONTs connected to the plurality of primary ONTs.

The determining module 2020 is configured to:
determine group information of the plurality of primary ONTs based on the strength of the interference between the plurality of primary ONTs connected to the first device.

In a possible implementation, the first device is a primary ONT or an OLT, the fourth device is a STA, the plurality of devices are STAs connected to edge ONTs, and the primary ONT is connected to the STAs through the edge ONTs. The obtaining module 2010 is further configured to receive channel matrices, between the plurality of edge ONTs and the STAs connected to the plurality of edge ONTs, sent by the plurality of edge ONTs.

The determining module 2020 is configured to:
determine, based on the channel matrices between the plurality of edge ONTs and the STAs connected to the plurality of edge ONTs, the group information of the STAs connected to the plurality of edge ONTs.

The determining module 2020 is further configured to determine a first downlink bandwidth allocation message based on the group information of the STAs connected to the plurality of edge ONTs, where the first downlink bandwidth allocation message indicates a resource occupied when the downlink data is transmitted to the fourth device from an edge ONT to which the fourth device belongs.

The sending module 2030 is further configured to send the first downlink bandwidth allocation message to the edge ONT to which the fourth device belongs.

In a possible implementation, the determining module 2020 is configured to:
determine, based on the group information, and an air interface status between the STA to which the downlink data belongs and the edge ONT, the downlink data to be sent this time and the fourth device to which the downlink data belongs in the plurality of edge ONTs.

Division into the modules in embodiments of this application is an example, and is merely logical function division. During actual implementation, another division manner may be used. In addition, the functional modules in embodiments of this application may be integrated in one processor, or may exist alone physically. Alternatively, two or more modules may be integrated into one module. The integrated module may be implemented in a form of hardware, or may be implemented in a form of a software functional module.

All or some of the foregoing embodiments may be implemented by using software, hardware, firmware, or any combination thereof. When the software is used for implementation, all or some of embodiments may be implemented in a form of a computer program product. The computer program product includes one or more computer instructions. When the computer program instructions are loaded and executed on a server or a terminal, all or some of the processes or functions according to embodiments of this application are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by a server or a terminal, or a data storage device, such as a server or a data center, integrating one or more usable media. The usable medium may be a magnetic medium (for example, a floppy disk, a hard disk, or a magnetic tape), an optical medium (for example, a digital video disk (digital video disk, DVD)), or a semiconductor medium (for example, a solid-state drive).

## Claims

1. A transmission scheduling method, wherein the method comprises:
receiving, by a first device, a first uplink scheduling request of a second device, wherein the first uplink scheduling request comprises first uplink buffer information, and the first uplink buffer information is determined based on uplink data to be sent by the second device;
generating, by the first device, a first uplink bandwidth allocation message based on information about interference between a plurality of devices connected to the first device and the first uplink buffer information, wherein the first uplink bandwidth allocation message indicates an uplink resource allocated to the second device, and interference caused to the second device when the second device sends the uplink data by using the uplink resource is less than a target threshold; and
receiving, by the first device, the data sent by the second device by using the uplink resource.

2. The method according to claim 1, wherein the generating, by the first device, a first uplink bandwidth allocation message based on information about interference between a plurality of devices connected to the first device and the first uplink buffer information comprises:
determining, by the first device, group information of the plurality of devices based on the information about the interference between the plurality of devices connected to the first device; and
generating, by the first device, the first uplink bandwidth allocation message based on the group information of the plurality of devices and the first uplink buffer information, wherein interference caused when devices belonging to a same group transmit data by using a same resource is less than the target threshold.

3. The method according to claim 2, wherein the first device is an optical line terminal OLT, the second device is a terminal device STA, the plurality of devices are a plurality of primary optical network terminals ONTs, the plurality of primary ONTs access the OLT, and the second device accesses a primary ONT through an edge ONT; and the method further comprises:
receiving, by the first device, information, about interference between edge ONTs connected to the plurality of primary ONTs, sent by the plurality of primary ONTs, wherein the information about the interference between the connected edge ONTs comprises one or more of a received signal strength indication RSSI, a channel occupancy ratio, or a channel occupancy spacing; and
determining, by the first device, strength of interference between the plurality of primary ONTs based on the information about the interference between the edge ONTs connected to the plurality of primary ONTs; and
the determining, by the first device, group information of the plurality of devices based on the information about the interference between the plurality of devices connected to the first device comprises:
determining, by the first device, the group information of the plurality of primary ONTs based on the strength of the interference between the plurality of primary ONTs connected to the first device.

4. The method according to claim 2, wherein the first device is a primary ONT, the second device is a STA, the plurality of devices are STAs connected to a plurality of edge ONTs, and the plurality of edge ONTs access the primary ONT; and the method further comprises:
receiving, by the first device, channel matrices, between the plurality of edge ONTs and the STAs connected to the plurality of edge ONTs, sent by the plurality of edge ONTs; and
the determining, by the first device, group information of the plurality of devices based on the information about the interference between the plurality of devices connected to the first device comprises:
determining, by the first device based on the channel matrices between the plurality of edge ONTs and the STAs connected to the plurality of edge ONTs, the group information of the STAs connected to the plurality of edge ONTs.

5. The method according to claim 4, wherein the first uplink scheduling request further comprises a sending start time point and a sending end time point that are determined by an edge ONT to which the second device belongs, the sending start time point is a time point at which the STA starts sending of the uplink data, and the sending end time point is a time point at which the STA ends sending of the uplink data; and the method further comprises:
sending, by the first device based on the sending start time point and the sending end time point, a second uplink bandwidth allocation message to the edge ONT to which the second device belongs, wherein a time point at which the second uplink bandwidth allocation message is transmitted to the edge ONT to which the second device belongs is not later than a time point at which the uplink data is transmitted to the edge ONT to which the second device belongs, and an uplink resource indicated by the second uplink bandwidth allocation message is used by the edge ONT to which the second device belongs to send the uplink data to the first device.

6. The method according to claim 4, wherein the method further comprises:
determining, by the first device based on time points at which the first uplink buffer information and the first uplink bandwidth allocation message are provided, a time point at which a second uplink scheduling request is sent, wherein the second uplink scheduling request is for requesting, from the first device, a resource used to send the uplink data to an OLT, and the time point is earlier than a time point at which the uplink data is transmitted to the first device;
sending, by the first device, the second uplink scheduling request to the OLT at the time point;
receiving, by the first device, a third uplink bandwidth allocation message sent by the OLT; and
sending, by the first device, the uplink data to the OLT by using an uplink resource indicated by the third uplink bandwidth allocation message.

7. The method according to claim 2, wherein the first device is an OLT, the second device is a STA, the plurality of devices are STAs connected to a plurality of edge ONTs, and the plurality of edge ONTs access the OLT through primary ONTs; and the method further comprises:
receiving, by the first device, channel matrices, between the plurality of edge ONTs and the STAs connected to the plurality of edge ONTs, sent by the plurality of edge ONTs; and
the determining, by the first device, group information of the plurality of devices based on the information about the interference between the plurality of devices connected to the first device comprises:
determining, by the first device based on the channel matrices between the plurality of edge ONTs connected to the first device and the STAs connected to the plurality of edge ONTs, the group information of the STAs connected to the plurality of edge ONTs.

8. The method according to any one of claims 1 to 7, wherein the generating, by the first device, a first uplink bandwidth allocation message based on information about interference between a plurality of devices connected to the first device and the first uplink buffer information comprises:
generating, by the first device, the first uplink bandwidth allocation message based on the information about the interference between the plurality of devices connected to the first device, the first uplink buffer information, and a service priority of the uplink data.

9. The method according to any one of claims 1 to 8, wherein the uplink resource indicated by the first uplink bandwidth allocation message is a space domain resource and a time domain resource, or a frequency domain resource and a time domain resource.

10. A transmission scheduling method, applied to a third device connected to a first device and a second device, wherein the method comprises:
sending, by the third device to the first device, interference information obtained by the third device;
sending, by the third device, a first uplink scheduling request of the second device to the first device based on uplink data to be sent by the second device, wherein the first uplink scheduling request comprises first uplink buffer information, and the first uplink buffer information is determined based on the uplink data;
receiving, by the third device, a first uplink bandwidth allocation message sent by the first device based on the interference information, and notifying, by the third device, the second device of an uplink resource indicated by the first uplink bandwidth allocation message; and
receiving, by the third device, the uplink data sent by the second device by using the uplink resource, and sending the uplink data to the first device.

11. The method according to claim 10, wherein the first device is a primary optical network terminal ONT or an optical line terminal OLT, the second device is a terminal device STA, the third device is an edge ONT accessed by the second device, and the interference information is a channel matrix between the third device and the STA connected to the third device; or
the first device is an OLT, the second device is a STA, the third device is an edge ONT accessed by the second device, and the interference information is information about interference between the third device and a plurality of edge ONTs accessing the OLT; or
the first device is an OLT, the second device is a STA, the third device is a primary ONT accessed by the second device, and the interference information is information about interference between the third device and a plurality of primary ONTs accessing the OLT.

12. The method according to claim 10, wherein the first device is a primary ONT, the second device is a STA, and the third device is an edge ONT accessed by the second device;
the method further comprises:
determining, by the third device, a sending start time point and a sending end time point based on the uplink data, wherein the sending start time point is a time point at which the STA starts sending of the uplink data, and the sending end time point is a time point at which the STA ends sending of the uplink data;
sending, by the third device, a third uplink scheduling request to the first device based on the uplink data, the sending start time point, and the sending end time point, wherein the third uplink scheduling request is for requesting the first device to allocate, to the third device, a resource used to transmit the uplink data to the first device; and
receiving, by the third device, a second uplink bandwidth allocation message sent by the first device; and
the sending the uplink data to the first device comprises:
sending the uplink data to the first device by using an uplink resource indicated by the second uplink bandwidth allocation message.

13. A transmission scheduling method, wherein the method comprises:
obtaining, by a first device, information about interference between a plurality of devices connected to the first device;
determining, by the first device based on the interference information, downlink data to be sent this time and a fourth device to which the downlink data belongs in the plurality of devices, wherein interference caused when a plurality of fourth devices transmit the downlink data is less than a target threshold; and
sending, by the first device, the downlink data to the fourth device.

14. The method according to claim 13, wherein the determining, by the first device based on the interference information, downlink data to be sent this time and a fourth device to which the downlink data belongs in the plurality of devices comprises:
determining, by the first device, group information of the plurality of devices based on the interference information, wherein interference caused when devices belonging to a same group transmit data by using a same resource is less than the target threshold; and
determining, by the first device based on the group information, the downlink data to be sent this time and the fourth device to which the downlink data belongs in the plurality of devices.

15. The method according to claim 14, wherein the first device is an optical line terminal OLT, the fourth device is a terminal device STA, the plurality of devices are a plurality of primary optical network terminals ONTs, the plurality of primary ONTs access the OLT, and the fourth device accesses a primary ONT through an edge ONT; and the method further comprises:
receiving, by the first device, information, about interference between edge ONTs connected to the plurality of primary ONTs, sent by the plurality of primary ONTs, wherein the information about the interference between the connected edge ONTs comprises one or more of a received signal strength indication RSSI, a channel occupancy ratio, or a channel occupancy spacing; and
determining, by the first device, strength of interference between the plurality of primary ONTs based on the information about the interference between the edge ONTs connected to the plurality of primary ONTs; and
the determining, by the first device, group information of the plurality of devices based on the interference information comprises:
determining, by the first device, the group information of the plurality of primary ONTs based on the strength of the interference between the plurality of primary ONTs connected to the first device.

16. The method according to claim 14, wherein the first device is a primary ONT or an OLT, the fourth device is a STA, the plurality of devices are STAs connected to edge ONTs, and the primary ONT is connected to the STAs through the edge ONTs; and the method further comprises:
receiving, by the first device, channel matrices, between the plurality of edge ONTs and the STAs connected to the plurality of edge ONTs, sent by the plurality of edge ONTs;
the determining, by the first device, group information of the plurality of devices based on the interference information comprises:
determining, by the first device based on the channel matrices between the plurality of edge ONTs and the STAs connected to the plurality of edge ONTs, the group information of the STAs connected to the plurality of edge ONTs; and
the method further comprises:
determining, by the first device, a downlink bandwidth allocation message based on the group information of the STAs connected to the plurality of edge ONTs, wherein the downlink bandwidth allocation message indicates a resource occupied when the downlink data is transmitted to the fourth device from an edge ONT to which the fourth device belongs; and
sending, by the first device, the downlink bandwidth allocation message to the edge ONT to which the fourth device belongs.

17. The method according to claim 16, wherein the determining, by the first device based on the interference information, downlink data to be sent this time and a fourth device to which the downlink data belongs in the plurality of devices comprises:
determining, by the first device, based on the group information, and an air interface status between the STA to which the downlink data belongs and the edge ONT, the downlink data to be sent this time and the fourth device to which the downlink data belongs in the plurality of edge ONTs.

18. A transmission scheduling apparatus, wherein the apparatus comprises:
a receiving module, configured to receive a first uplink scheduling request of a second device, wherein the first uplink scheduling request comprises first uplink buffer information, and the first uplink buffer information is determined based on uplink data to be sent by the second device; and
an allocation module, configured to generate a first uplink bandwidth allocation message based on information about interference between a plurality of devices connected to the first device and the first uplink buffer information, wherein the first uplink bandwidth allocation message indicates an uplink resource allocated to the second device, and interference caused to the second device when the second device sends the uplink data by using the uplink resource is less than a target threshold; and
the receiving module is further configured to receive the data sent by the second device by using the uplink resource.

19. The apparatus according to claim 18, wherein the allocation module is configured to:
determine group information of the plurality of devices based on the information about the interference between the plurality of devices connected to the first device; and
generate the first uplink bandwidth allocation message based on the group information of the plurality of devices and the first uplink buffer information, wherein interference caused when devices belonging to a same group transmit data by using a same resource is less than the target threshold.

20. The apparatus according to claim 19, wherein the first device is an optical line terminal OLT, the second device is a terminal device STA, the plurality of devices are a plurality of primary optical network terminals ONTs, the plurality of primary ONTs access the OLT, and the second device accesses a primary ONT through an edge ONT; and the receiving module is further configured to receive information, about interference between edge ONTs connected to the plurality of primary ONTs, sent by the plurality of primary ONTs, wherein the information about the interference between the connected edge ONTs comprises one or more of a received signal strength indication RSSI, a channel occupancy ratio, or a channel occupancy spacing;
the allocation module is further configured to determine strength of interference between the plurality of primary ONTs based on the information about the interference between the edge ONTs connected to the plurality of primary ONTs; and
the allocation module is configured to:
determine group information of the plurality of primary ONTs based on the strength of the interference between the plurality of primary ONTs connected to the first device.

21. The apparatus according to claim 19, wherein the first device is a primary ONT, the second device is a STA, the plurality of devices are STAs connected to a plurality of edge ONTs, and the plurality of edge ONTs access the primary ONT; and the receiving module is further configured to receive channel matrices, between the plurality of edge ONTs and the STAs connected to the plurality of edge ONTs, sent by the plurality of edge ONTs; and
the allocation module is configured to determine, based on the channel matrices between the plurality of edge ONTs and the STAs connected to the plurality of edge ONTs, the group information of the STAs connected to the plurality of edge ONTs.

22. The apparatus according to claim 21, wherein the first uplink scheduling request further comprises a sending start time point and a sending end time point that are determined by an edge ONT to which the second device belongs, the sending start time point is a time point at which the STA starts sending of the uplink data, and the sending end time point is a time point at which the STA ends sending of the uplink data; and
the allocation module is further configured to send, based on the sending start time point and the sending end time point, a second uplink bandwidth allocation message to the edge ONT to which the second device belongs, wherein a time point at which the second uplink bandwidth allocation message is transmitted to the edge ONT to which the second device belongs is not later than a time point at which the uplink data is transmitted to the edge ONT to which the second device belongs, and an uplink resource indicated by the second uplink bandwidth allocation message is used by the edge ONT to which the second device belongs to send the uplink data to the first device.

23. The apparatus according to claim 21, wherein the allocation module is further configured to:
determine, based on time points at which the first uplink buffer information and the first uplink bandwidth allocation message are provided, a time point at which a second uplink scheduling request is sent, wherein the second uplink scheduling request is for requesting, from the first device, a resource used to send the uplink data to an OLT, and the time point is earlier than a time point at which the uplink data is transmitted to the first device; and
send the second uplink scheduling request to the OLT at the time point;
the receiving module is further configured to receive a third uplink bandwidth allocation message sent by the OLT; and
the allocation module is further configured to send the uplink data to the OLT by using an uplink resource indicated by the third uplink bandwidth allocation message.

24. The apparatus according to claim 19, wherein the first device is an OLT, the second device is a STA, the plurality of devices are STAs connected to a plurality of edge ONTs, and the plurality of edge ONTs access the OLT through primary ONTs; and the receiving module is further configured to receive channel matrices, between the plurality of edge ONTs and the STAs connected to the plurality of edge ONTs, sent by the plurality of edge ONTs; and
the determining module is configured to:
determine, based on the channel matrices between the plurality of edge ONTs connected to the first device and the STAs connected to the plurality of edge ONTs, the group information of the STAs connected to the plurality of edge ONTs.

25. The apparatus according to any one of claims 19 to 24, wherein the allocation module is configured to:
generate the first uplink bandwidth allocation message based on the information about the interference between the plurality of devices connected to the first device, the first uplink buffer information, and a service priority of the uplink data.

26. A transmission scheduling apparatus, wherein the apparatus comprises:
a sending module, configured to: send, to the first device, interference information obtained by the third device; and send a first uplink scheduling request of a second device to the first device based on uplink data to be sent by the second device, wherein the first uplink scheduling request comprises first uplink buffer information, and the first uplink buffer information is determined based on the uplink data; and
a receiving module, configured to receive a first uplink bandwidth allocation message sent by the first device based on the interference information;
the sending module is further configured to notify the second device of an uplink resource indicated by the first uplink bandwidth allocation message;
the receiving module is further configured to receive the uplink data sent by the second device by using the uplink resource; and
the sending module is further configured to send the uplink data to the first device.

27. A transmission scheduling apparatus, wherein the apparatus comprises:
an obtaining module, configured to obtain information about interference between a plurality of devices connected to the first device;
a determining module, configured to determine, based on the interference information, downlink data to be sent this time and a fourth device to which the downlink data belongs in the plurality of devices, wherein interference caused when a plurality of fourth devices transmit the downlink data is less than a target threshold; and
a sending module, configured to send the downlink data to the fourth device.

28. The apparatus according to claim 27, wherein the determining module is configured to:
determine group information of the plurality of devices based on the interference information, wherein interference caused when devices belonging to a same group transmit data by using a same resource is less than the target threshold; and
determine, based on the group information, the downlink data to be sent this time and the fourth device to which the downlink data belongs in the plurality of devices.

29. The apparatus according to claim 28, wherein the first device is an optical line terminal OLT, the fourth device is a terminal device STA, the plurality of devices are a plurality of primary optical network terminals ONTs, the plurality of primary ONTs access the OLT, and the fourth device accesses a primary ONT through an edge ONT; and the obtaining module is further configured to receive information, about interference between edge ONTs connected to the plurality of primary ONTs, sent by the plurality of primary ONTs, wherein the information about the interference between the connected edge ONTs comprises one or more of a received signal strength indication RSSI, a channel occupancy ratio, or a channel occupancy spacing;
the determining module is further configured to determine strength of interference between the plurality of primary ONTs based on the information about the interference between the edge ONTs connected to the plurality of primary ONTs; and
the determining module is configured to:
determine group information of the plurality of primary ONTs based on the strength of the interference between the plurality of primary ONTs connected to the first device.

30. The apparatus according to claim 28, wherein the first device is a primary ONT or an OLT, the fourth device is a STA, the plurality of devices are STAs connected to edge ONTs, and the primary ONT is connected to the STAs through the edge ONTs;
the obtaining module is further configured to receive channel matrices, between the plurality of edge ONTs and the STAs connected to the plurality of edge ONTs, sent by the plurality of edge ONTs;
the determining module is configured to:
determine, based on the channel matrices between the plurality of edge ONTs and the STAs connected to the plurality of edge ONTs, the group information of the STAs connected to the plurality of edge ONTs;
the determining module is further configured to determine a downlink bandwidth allocation message based on the group information of the STAs connected to the plurality of edge ONTs, wherein the downlink bandwidth allocation message indicates a resource occupied when the downlink data is transmitted to the fourth device from an edge ONT to which the fourth device belongs; and
the sending module is further configured to send the downlink bandwidth allocation message to the edge ONT to which the fourth device belongs.

31. The apparatus according to claim 30, wherein the determining module is configured to:
determine, based on the group information, and an air interface status between the STA to which the downlink data belongs and the edge ONT, the downlink data to be sent this time and the fourth device to which the downlink data belongs in the plurality of edge ONTs.

32. A transmission scheduling computing device, wherein the computing device comprises a processor and a memory, wherein
the memory stores computer instructions; and the processor executes the computer instructions, to implement the method according to any one of claims 1 to 9.

33. A computer-readable storage medium, wherein the computer-readable storage medium stores computer instructions; and when the computer instructions in the computer-readable storage medium are executed by a computing device, the computing device is enabled to perform the method according to any one of claims 1 to 9.

34. A transmission scheduling computing device, wherein the computing device comprises a processor and a memory, wherein
the memory stores computer instructions; and the processor executes the computer instructions, to implement the method according to any one of claims 10 to 12.

35. A computer-readable storage medium, wherein the computer-readable storage medium stores computer instructions; and when the computer instructions in the computer-readable storage medium are executed by a computing device, the computing device is enabled to perform the method according to any one of claims 10 to 12.

36. A transmission scheduling computing device, wherein the computing device comprises a processor and a memory, wherein
the memory stores computer instructions; and the processor executes the computer instructions, to implement the method according to any one of claims 13 to 17.

37. A computer-readable storage medium, wherein the computer-readable storage medium stores computer instructions; and when the computer instructions in the computer-readable storage medium are executed by a computing device, the computing device is enabled to perform the method according to any one of claims 13 to 17.
